# EUROPEAN PATENT APPLICATION

(11) **EP 4 836 541 A1**
(43) Date of publication of application: **04.11.2026**
(21) Application number: 25747413.0
(22) Date of filing: 03.01.2025
(51) Int. Cl.: H04W 52/02

(54) **COMMUNICATION METHOD AND SYSTEM, AND RELATED DEVICE**

(30) Priority: 04.02.2024 CN 202410160732
(71) Applicant: Honor Device Co., Ltd., Shenzhen, Guangdong 518040 (CN)
(72) Inventor: ZHANG, Jian, Shenzhen, Guangdong 518040 (CN)
(74) Representative: Isarpatent
(86) International application number: PCT/CN2025/070355
(87) International publication number: WO 2025/161837

(57) **Abstract**

Embodiments of this application provide a communication method and system and a related device. The method includes: A first network element determines that a condition for sending a wakeup signal to a second network element is satisfied, where the first network element has established an RRC connection with a UE, and the second network element has not established the RRC connection with the UE. The wake-up signal is used for triggering the second network element to send a first signal. The first signal is used by the UE to achieve downlink synchronization with the second network element or by the UE to perform signal quality measurement on the first signal. Then the first network element sends the wake-up signal to the second network element, to trigger the second network element to send the first signal. The first signal may be an SSB, a SIB1, a TRS, or the like. In this way, before receiving the wake-up signal, the second network element may be in a state of not broadcasting the first signal, to save energy consumption generated by sending the first signal, thereby achieving network energy saving.

## Description

This application claims priority to Chinese Patent Application No. 202410160732.0, filed with China National Intellectual Property Administration on February 4, 2024, and entitled "COMMUNICATION METHOD AND SYSTEM AND RELATED DEVICE", which is incorporated herein by reference in its entirety.

### TECHNICAL FIELD

This application relates to the field of communication technologies, and in particular, to a communication method and system and a related device.

### BACKGROUND

In an actual application scenario, a plurality of network elements (such as base stations) often provide communication services for a user equipment (user equipment, UE), and different network elements communicate with the UE at different frequencies. In addition, the plurality of network elements may support carrier aggregation (carrier aggregation, CA), to satisfy a relatively high requirement of the UE for a bandwidth. The plurality of network elements may share a site at a same location, that is, may be co-located (co-located). Alternatively, the plurality of network elements may be deployed at different sites, or the like. Under normal circumstances, each network element supporting CA may periodically send a synchronization signal/physical broadcast channel block (synchronization signal/physical broadcast channel block, SSB) signal and a system information block 1 (system information block 1, SIB 1) signal, so that the UE within signal coverage of the network element can perform downlink synchronization with the network element in time domain and frequency domain and access the network element based on the received SSB signal and SIB1 signal.

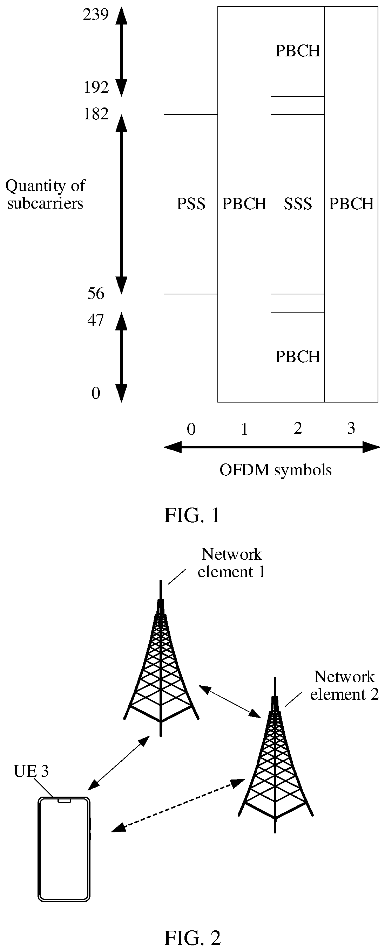

As shown in FIG. 1, the SSB includes a primary synchronization signal (primary synchronization signal, PSS), a secondary synchronization signal (secondary synchronization signal, SSS), a physical broadcast channel (physical broadcast channel, PBCH), and a demodulation reference signal (demodulation reference signal, DMRS). Under normal circumstances, an SSB occupies four orthogonal frequency division multiplexing symbols (orthogonal frequency division multiplexing, OFDM) in time domain, and occupies 240 subcarriers in frequency domain.

However, when each network element broadcasts the SSB signal and the SIB1 signal on one or more beams (beams), the network element remains in a continuous high-power operating state, causing energy consumption of the network element to be maintained at a relatively high level for a long time.

### SUMMARY

This application provides a communication method, a system, and a related device, to reduce energy consumption of a network element and implement network energy saving.

To achieve the foregoing objectives, this application provides the following technical solutions.

According to a first aspect, this application provides a communication method. The method is applied to a second network element. The method includes: The second network element receives a wake-up signal. The wake-up signal is used for triggering the second network element to send a first signal, the first signal (such as an SSB and a SIB1) is used by a UE (user equipment) to achieve downlink synchronization with the second network element, or the first signal (such as a TRS) is used by the UE to perform signal quality measurement on the first signal, and the UE has not established the RRC (radio resource control) connection with the second network element. Then the second network element sends the first signal.

Because before receiving the wake-up signal, the second network element does not need to broadcast the first signal, the UE achieves downlink synchronization with the second network element or the UE performs signal quality measurement on the first signal, so that the second network element can save energy consumption generated by sending the first signal, thereby implementing energy saving. Meanwhile, after receiving the wake-up signal, the second network element can allow the UE to achieve downlink synchronization with the second network element by broadcasting the first signal, to ensure that the UE can normally access the second network element, or can allow the UE to perform signal quality measurement on the first signal from the second network element, to satisfy a requirement of the UE for measuring signal quality.

In a possible implementation, the first signal is one or more of an SSB (a synchronization signal/physical broadcast channel block), a SIB1 (a system information block), and a TRS (a tracking reference signal).

According to a second aspect, this application provides a communication method. The method is applied to a first network element. The first network element has established an RRC (radio resource control) connection with a UE (a user equipment). The method includes: The first network element determines that a condition for sending a wake-up signal to a second network element is satisfied, where the second network element has not established the RRC connection with the UE, the wake-up signal is used for triggering the second network element to send a first signal, and the first signal is used by the UE to achieve downlink synchronization with the second network element or by the UE to perform signal quality measurement on the first signal. Then the first network element sends the wake-up signal to the second network element.

In this way, before receiving the wake-up signal, the second network element may be in a state of not broadcasting the first signal, to save energy consumption generated by sending the first signal, thereby achieving network energy saving. Meanwhile, after the second network receives the wake-up signal, the second network element can allow the UE to achieve downlink synchronization with the second network element by broadcasting the first signal, to ensure that the UE can normally access the second network element, or can allow the UE to perform signal quality measurement on the first signal from the second network element, to satisfy a requirement of the UE for measuring signal quality.

In a possible implementation, that the first network element determines that a condition for sending a wake-up signal to the second network element is satisfied specifically includes: The first network element sends an RRC reconfiguration message to the UE. The RRC reconfiguration message is used for configuring the UE to perform signal quality measurement on the first signal from the second network element. Then the first network element may further receive a measurement report from the UE. The measurement report includes a measurement result of signal quality measurement performed by the UE on the first signal from the second network element. In this way, in a process in which the first network element performs measurement configuration on the UE, the first network element may trigger the second network element to broadcast the first signal by sending the wake-up signal, thereby satisfying a requirement of the first network element for obtaining the measurement result of signal quality measurement performed by the UE on the signal from the second network element.

In a possible implementation, that the first network element determines that a condition for sending a wake-up signal to the second network element is satisfied specifically includes: The first network element sends an RRC reconfiguration message to the UE. The RRC reconfiguration message is used for adding a carrier of the second network element to the UE. The first network element further sends an activation message to the UE. The activation message is used for activating the carrier of the second network element that is added to the UE. Then the first network element may further receive a measurement report from the UE. The measurement report includes a measurement result of signal quality measurement performed by the UE on the first signal from the second network element. In this way, in a process in which the first network element adds the carrier of the second network element to the UE, the first network element may trigger the second network element to broadcast the first signal by sending the wake-up signal, so that the first network element learns the measurement result of signal quality measurement performed by the UE on the first signal from the second network element.

In a possible implementation, that the first network element determines that a condition for sending a wake-up signal to the second network element is satisfied specifically includes: The first network element receives an on-demand message from the UE. The on-demand message is used for triggering the first network element to send the wake-up signal to the second network element. In this way, when the UE needs to obtain the first signal from the second network element, the UE may indicate, by sending the on-demand message to the first network element, the first network element to trigger the second network element to send the first signal, to satisfy a requirement of the UE for the first signal.

In a possible implementation, before receiving the on-demand message from the UE, the first network element may further send a first configuration message to the UE. The first configuration message is used for configuring a first time-frequency resource used by the UE to send the on-demand message. In this way, the UE may implement sending of the on-demand message based on the time-frequency resource configured by the first network element, thereby satisfying a requirement of the UE for the first signal.

In a possible implementation, when receiving the on-demand message from the UE, the first network element may specifically receive the on-demand message from the UE based on a DCCH (a dedicated control channel). In this case, the on-demand message is dedicated signaling.

In a possible implementation, the first time-frequency resource is a time-frequency resource on a PRACH (a physical random access channel), and the on-demand message is a random access message. Alternatively, the first time-frequency resource is a time-frequency resource on a PUCCH (a physical uplink control channel), and the on-demand message is an SR (scheduling request) message or UCI (uplink control information). Alternatively, the first time-frequency resource is an SRS (sounding reference signal) resource, and the on-demand message is an SRS.

In a possible implementation, the on-demand message received by the first network element includes a cause field. The cause field indicates a reason why the UE requests the first signal. In this way, the first network element may perceive the reason why the UE requests the first signal based on the cause field, thereby providing more UE-related information for the first network element.

In a possible implementation, the first signal sent by the second network element is one or more of a synchronization signal/physical broadcast channel block SSB, a system information block SIB1, and a tracking reference signal TRS.

In a possible implementation, the first signal sent by the second network element is an SSB. Therefore, the first network element may further send a SIB1 of the second network element to the UE. The SSB and the SIB1 of the second network element may be used for the UE to access the second network element. In this way, the second network element does not need to broadcast the SIB1, and the SIB1 may be provided to the UE by the first network element, thereby saving energy consumption of the second network element.

In a possible implementation, the wake-up signal sent by the first network element to the second network element includes a cause field. The cause field indicates a reason why the first network element instructs the second network element to send the first signal.

In a possible implementation, when the UE accesses the second network element, the first network element may further send a second configuration message to the UE. The second configuration message is used for configuring a second time-frequency resource used by the UE to send a wake-up signal to a network element 2. In this way, in a carrier aggregation scenario, the UE may directly send a WUS through the second time-frequency resource, to trigger the second network element to broadcast the first signal, thereby satisfying a requirement of the UE for the first signal.

According to a third aspect, this application provides a UE (a user equipment). The UE establishes an RRC (radio resource control) connection with a first network element, but does not establish an RRC connection with a second network element. The UE sends an on-demand message to the first network element based on the RRC connection. The on-demand message is used for triggering the first network element to send a wake-up signal to the second network element, and the wake-up signal is used for triggering the second network element to send a first signal. Then, the UE receives the first signal. The first signal is used by the UE to achieve downlink synchronization with the second network element or by the UE to perform signal quality measurement on the first signal.

In this way, the UE may trigger, through sending the on-demand message, the first network element to trigger the second network element to send the first signal, so that before the UE sends the on-demand message, the second network element may be in a state of not broadcasting the first signal, to save energy consumption generated by sending the first signal, thereby achieving network energy saving. Meanwhile, after the UE sends the on-demand message, the second network element can allow the UE to achieve downlink synchronization with the second network element by broadcasting the first signal, to ensure that the UE can normally access the second network element, or can allow the UE to perform signal quality measurement on the first signal from the second network element, to satisfy a requirement of the UE for measuring signal quality.

In a possible implementation, the UE achieves downlink synchronization with the second network element based on the received first signal, so that the UE subsequently accesses the second network element.

In a possible implementation, the UE may further receive an RRC reconfiguration message from the first network element. The RRC reconfiguration message is used for configuring the UE to perform signal quality measurement on the first signal from the second network element. Then, the UE may measure signal quality of the received first signal, to obtain a measurement result, and send a measurement report to the first network element. The measurement report includes the measurement result. In this way, by measuring and reporting the signal quality of the first signal, the UE can allow the first network element to perceive a level of signal quality of the first signal broadcast by the second network element when the first signal is transmitted to the UE.

In a possible implementation, the UE may further receive an RRC reconfiguration message from the first network element. The RRC reconfiguration message is used for adding a carrier of the second network element to the UE. Further, the UE may receive an activation message from the first network element. The activation message is used for activating the carrier of the second network element that is added to the UE. Then, the UE measures signal quality of the first signal, to obtain a measurement result, and sends a measurement report to the first network element. The measurement report includes the measurement result. In this way, in a process in which the first network element adds the carrier of the second network element to the UE, by measuring and reporting the signal quality of the first signal, the UE can allow the first network element to perceive a level of signal quality of the first signal broadcast by the second network element when the first signal is transmitted to the UE, so that the first network element subsequently determines whether to continue to add the carrier of the second network element to the UE. For example, when the measurement result indicates that the signal quality of the first signal is relatively low, the first network element may determine not to add the carrier of the second network element to the UE.

In a possible implementation, the on-demand message is sent through a first time-frequency resource. Then, before the sending an on-demand message to the first network element, the UE may further receive a first configuration message from the first network element. The first configuration message is used for configuring a first time-frequency resource configured by the UE to send the on-demand message. The UE may implement sending of the on-demand message based on the time-frequency resource configured by the first network element, thereby satisfying a requirement of the UE for the first signal.

In a possible implementation, the first time-frequency resource is a time-frequency resource on a PRACH (a physical random access channel), and the on-demand message is a random access message. Alternatively, the first time-frequency resource is a time-frequency resource on a PUCCH (a physical uplink control channel), and the on-demand message is an SR (scheduling request) message or UCI (uplink control information). Alternatively, the first time-frequency resource is an SRS (sounding reference signal) resource, and the on-demand message is an SRS.

In a possible implementation, the on-demand message sent by the UE includes a cause field. The cause field indicates a reason why the UE requests the first signal. In this way, the first network element may perceive the reason why the UE requests the first signal based on the cause field, thereby providing more UE-related information for the first network element.

In a possible implementation, the first signal received by the UE is one or more of an SSB (a synchronization signal/physical broadcast channel block), a SIB1 (a system information block), and a TRS (a tracking reference signal).

In a possible implementation, the first signal received by the UE is an SSB. Then, the UE may further receive, from the first network element through the RRC connection, a system information block SIB1 of the second network element, and when downlink synchronization with the second network element based on the SSB is achieved, access the second network element based on the SSB and the SIB1. In this way, the second network element does not need to broadcast the SIB1, and the UE may access the second network element based on the SIB1 of the second network element provided by the first network element, thereby saving energy consumption of the second network element.

In a possible implementation, when the UE accesses the second network element, the UE receives a second configuration message sent by the first network element. The second configuration message is used for configuring a second time-frequency resource used by the UE to send a wake-up signal. Then, the UE sends the wake-up signal to the second network element through the second time-frequency resource, to trigger the second network element to broadcast the first signal. In this way, in a carrier aggregation scenario, the UE may directly trigger the second network element to broadcast the first signal, thereby satisfying a requirement of the UE for the first signal.

According to a fourth aspect, this application provides a network element. The network element includes a transceiver and a processor. The transceiver is configured to perform a receiving operation and a sending operation in the method according to the foregoing first aspect or any one of the implementations of the first aspect, or perform a receiving operation and a sending operation in the method according to the foregoing second aspect or any one of the implementations of the second aspect. The processor is configured to perform other operations than the receiving operation and the sending operation in the method according to the foregoing first aspect or any one of the implementations of the first aspect, or perform other operations than the receiving operation and the sending operation in the method according to the foregoing second aspect or any one of the implementations of the second aspect.

According to a fifth aspect, this application provides a UE (a user equipment). The UE includes a transceiver and a processor. The transceiver is configured to perform a receiving operation and a sending operation in the method according to the foregoing third aspect or any one of the implementations of the third aspect. The processor is configured to perform other operations than the receiving operation and the sending operation in the method according to the foregoing third aspect or any one of the implementations of the third aspect.

According to a sixth aspect, this application provides a communication system. The communication system includes a UE (a user equipment) and a network element. The UE is configured to perform the method according to the foregoing third aspect or any one of the implementations of the third aspect. The network element is configured to perform the method according to the foregoing first aspect or any one of the implementations of the first aspect, or perform the method according to the foregoing second aspect or any one of the implementations of the second aspect.

According to a seventh aspect, this application provides a computer storage medium, configured to store a computer program. The computer program, when executed, is configured to implement the communication method provided in any one of the first aspect to the third aspect of this application.

According to an eighth aspect, this application provides a computer program product including instructions. The computer program product, when run on at least one computing device, causes the at least one computing device to implement the communication method provided in any one of the first aspect to the third aspect of this application.

### BRIEF DESCRIPTION OF DRAWINGS

FIG. 1 is a schematic structural diagram of an SSB according to an embodiment of this application;
FIG. 2 is a structural diagram of an example communication system according to an embodiment of this application;
FIG. 3 is a schematic flowchart of a communication method according to an embodiment of this application;
FIG. 4 is a schematic flowchart of another communication method according to an embodiment of this application;
FIG. 5 is a schematic flowchart of still another communication method according to an embodiment of this application;
FIG. 6 is a schematic flowchart of yet another communication method according to an embodiment of this application;
FIG. 7 is a schematic diagram of an on-demand message according to an embodiment of this application;
FIG. 8 is a schematic flowchart of yet another communication method according to an embodiment of this application;
FIG. 9 is a schematic flowchart of a communication method according to an embodiment of this application;
FIG. 10 is a schematic structural diagram of a network element according to an embodiment of this application; and
FIG. 11 is a schematic structural diagram of a UE according to an embodiment of this application.

### DESCRIPTION OF EMBODIMENTS

Technical solutions in embodiments of this application are clearly described below with reference to the accompanying drawings in embodiments of this application. Terms used in the following embodiments are only intended to describe specific embodiments, and are not intended to limit this application. As used in this specification and the claims of this application, a singular expression form, "one", "a", "the", "foregoing", "said", or "this", is intended to include expression forms such as "one or more", unless clearly indicated to the contrary in the context. It should also be understood that, in embodiments of this application, "one or more" means one, two, or more than two, and "and/or" describes an association relationship between associated objects, indicating that three relationships may exist. For example, "A and/or B" may represent the following cases: only A exists, both A and B exist, and only B exists, where A and B may be singular or plural. The character "/" generally indicates an "or" relationship between associated objects.

Reference to "one embodiment", "some embodiments", or the like described in this specification means that a specific feature, structure, or characteristic described in combination with the embodiment is included in one or more embodiments of this application. Therefore, phrases "in an embodiment", "in some embodiments", "in some other embodiments", "in some additional embodiments", and the like appearing in different parts of this specification do not necessarily refer to the same embodiment, but mean "one or more but not all embodiments", unless otherwise specially emphasized in another manner. Terms "comprise", "include", "have", and variations thereof all mean "including but not limited to", unless otherwise specially emphasized in another manner.

"A plurality of" involved in embodiments of this application means being greater than or equal to two. It should be noted that, in the description of embodiments of this application, terms such as "first" and "second" are merely used for distinguishing, and cannot be understood as an indication or implication of relative importance, or an indication or implication of a sequence.

Embodiments of this application are applied to a communication system, which may be a fifth generation (5G) communication system, or may be an LTE and 5G hybrid architecture, or a 5G new radio (5G New Radio, 5G NR) system, or a new communication system in future communication development, and the like.

An example of the communication system is shown in FIG. 2. The communication system includes a network element 1, a network element 2, and a UE3.

In embodiments provided in this application, the network element 1 may be any device located on a network side and having wireless receiving and sending functions, including but not limited to a base station (gNodeB or gNB) or a transmission receiving point/transmission reception point (transmission receiving point/transmission reception point, TRP) in new radio (new radio, NR), or the like. The network element 1 may be a macro base station, a micro base station, a Picocell, a small cell, a relay station, a partial sector antenna on a base station, a balloon station, or the like. The network element 1 may include one or more co-located or non-co-located transmission reception points (Transmission Reception Points, TRPs). The network element 1 may alternatively be a radio controller, a centralized unit (centralized unit, CU), and/or a distributed unit (distributed unit, DU) in a cloud radio access network (cloud radio access network, CRAN) scenario. The network element 1 may communicate with a terminal device, or may communicate with the terminal device through the relay station. The network element 2 is similar to the network element 1.

A base station may be configured with a plurality of cells (cells), where each of the cells may be a same carrier (Component Carrier, CC) or different carriers. In this application, the term "cell" and the term "carrier" are interchangeable. The carrier may be understood as a segment of frequency within a band/frequency range (Band). For example, in NR, a frequency range of a band numbered 78, that is, Band n78, is 3300 MHz to 3800 MHz. Therefore, the band has a bandwidth of 500 MHz. If one CC occupies a bandwidth of 100 MHz, five CCs may be formed based on Band n78. In addition, the base station may be configured with three sectors, and each of the sectors corresponds to a cell. In a carrier aggregation (CA) scenario, the carrier aggregation may be intra-band (intra band) carrier aggregation, or inter-band (inter band) carrier aggregation. Aggregation of two carriers is used as an example. For the intra-band carrier aggregation, aggregated carriers may be two carriers within a same band, for example, two CCs within Band n78 that occupy a bandwidth of 100 MHz. For the inter-band carrier aggregation, aggregated carriers may be two carriers within different bands, for example, one CC within Band n78 that occupies a bandwidth of 100 MHz and the other CC within Band n41 that occupies a bandwidth of 100 MHz. The aggregated carriers may come from a same base station. In this case, it may be considered that the carriers are co-located (co-located). The aggregated carriers may also come from different base stations. In this case, the carriers may be co-located, or may be non-co-located. The network element 1 and the network element 2 are configured to implement different cells. In this case, the network element 1 and the network element 2 may be different base stations, and are configured to implement different cells. Alternatively, the network element 1 and the network element 2 may be located on a same base station, for example, may be different sector antennas on the same base station, and configured to implement different cells. The network element 1 and the network element 2 can support CA (carrier aggregation), to satisfy a requirement of the UE3 for a relatively high bandwidth. For example, when the UE3 simultaneously accesses the network element 1 and the network element 2, the network element 1 may implement a primary cell (primary cell, PCell), for example, responsible for transmission of signaling and user data (user data) between the UE3 and a network side, and the network element 2 may implement a secondary cell (secondary cell, SCell), for example, responsible for transmission of user data between the UE3 and the network side.

The UE3 may communicate with a plurality of network elements of different technologies. For example, the UE3 may communicate with a network element supporting an LTE network, or may communicate with a network element supporting a 5G network, and may further perform dual connectivity with the network element supporting the LTE network and the network element supporting the 5G network.

In embodiments provided in this application, the UE3 may be in various forms, for example, a mobile phone (mobile phone), a tablet computer (Pad), a computer with wireless receiving and sending functions, a virtual reality (virtual reality, VR) terminal device, an augmented reality (augmented reality, AR) terminal device, a wireless terminal in industrial control (industrial control), an on-board terminal device, a wireless terminal in self driving (self driving), a wireless terminal in telemedicine (remote medical), a wireless terminal in smart grid (smart grid), a wireless terminal in transportation safety (transportation safety), a wireless terminal in smart city (smart city), a wireless terminal in smart home (smart home), and a wearable terminal device. The UE may sometimes also be referred to as a terminal device, an access terminal device, an on-board terminal, an industrial control terminal, a UE unit, a UE station, a mobile station, a mobile console, a remote station, a remote terminal device, a mobile device, a UE terminal device, a terminal device, a wireless communication device, a UE agent, a UE apparatus, or the like. The terminal may also be a fixed terminal or a mobile terminal.

The foregoing description is provided by using an example in which the communication system includes the network element 1, the network element 2, and the UE3. In another possible implementation, the communication system may include a plurality of UEs or a larger quantity of network elements. Alternatively, in another possible implementation, the network element 1 in the communication system may also be replaced by a network element in another form. No limitation is imposed herein. For ease of understanding, a description is provided below by using an example in which the UE3 and the network element 1 interact with each other.

Under normal circumstances, a plurality of network elements in the communication system that support CA may periodically broadcast an SSB and a SIB1 on a plurality of beams. For example, each of the network elements may send the SSB on each of the beams every 20 ms. A UE (including the UE3) within signal coverage of the network element attempts to detect the SSB and decode a PSS and an SSS. Once the UE3 successfully detects the PSS and the SSS, the UE attempts to decode a PBCH. Once the UE3 successfully detects the PBCH, the UE3 decodes a master information block (master information block, MIB). Then, the UE3 finds a position of CORESET0 (that is, a CORESET for a PDCCH or DCI used for SIB1 transmission) and SearchSpace information based on pdcch-ConfigSIB1 information in the MIB. The UE3 blindly decodes downlink control information (downlink control information, DCI) 1_0 in SearchSpace. The UE3 detects and decodes, based on the DCI 1_0, a physical downlink shared channel (physical downlink shared channel, PDSCH) carrying the SIB1, and then decodes the SIB1. If the SIB1 carries information about another SIB, the UE3 may further decode the another SIB (such as a SIB2). Through the foregoing process, the UE3 can obtain time and frequency synchronization with the network element, and detect an ID of the network element. However, each network element in the communication system continuously sends the SSB and the SIB1 on a plurality of beams, causing high power consumption of the plurality of network elements.

Therefore, embodiments of this application provide a communication method. For some network elements supporting CA, before receiving a wake-up signal, the network elements may not send an SSB and/or a SIB1, so that energy consumption of the network elements can be saved, thereby achieving network energy saving (network energy saving, NES). In addition, after the network elements are woken up, the network elements may send an SSB and/or a SIB1.

The following describes various communication methods provided in this application for achieving network energy saving with reference to the accompanying drawings. For ease of understanding, the various communication methods described below with reference to the accompanying drawings are described by using an example in which the methods are applied to the communication system shown in FIG. 2. In an actual application, a communication process between a network element and a UE in the communication system may also be applied to another communication system supporting CA. No limitation is imposed herein.

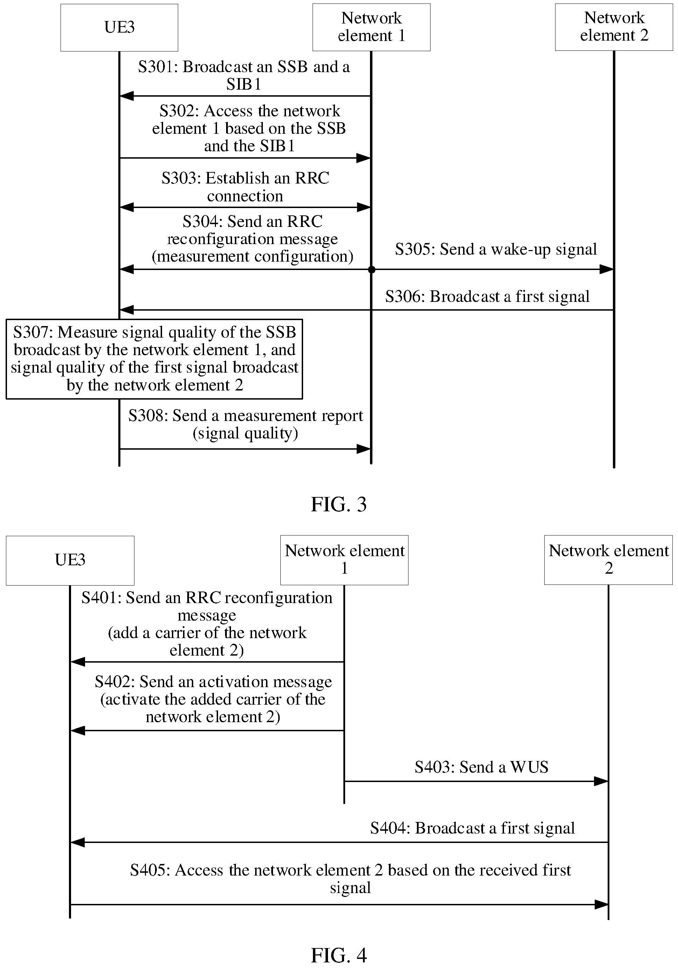

Refer to FIG. 3. A communication method according to an embodiment of this application is shown. As shown in FIG. 3, the flow of the communication method includes the following steps:
S301: A network element 1 broadcasts an SSB and a SIB1.

In this embodiment, the network element 1 may periodically broadcast the SSB and the SIB1. The period may be, for example, 20 milliseconds (ms), or may be 40 ms, and the like. No limitation is imposed herein. The network element 1 may respectively broadcast the SSB and the SIB1 on a plurality of beams. For example, the network element 1 may respectively send the SSB and the SIB1 on eight beams. When the network element 1 sends the SSB and the SIB1 on different beams, the network element may respectively send the SSB and the SIB1 on different time-domain resources. Alternatively, the network element 1 may send the SSB and the SIB1 without distinguishing between beams.

It should be noted that, in a process in which the network element 1 broadcasts the SSB and the SIB1, a network element 2 may be in a state of not broadcasting the SSB and the SIB1, to save energy consumption of the network element 2.

S302: A UE3 accesses the network element 1 based on the received SSB and SIB1.

In a specific implementation, the UE3 may be within signal coverage of the network element 1. Therefore, after receiving the SSB and the SIB1, the UE3 may achieve downlink synchronization with the network element 1 based on the SSB, and implement access to the network element 1 based on an MIB in the SSB and the SIB1.

S303: The UE3 establishes a radio resource control (radio resource control, RRC) connection with the network element 1.

For example, after accessing the network element 1, the UE3 may establish an RRC connection with the network element 1, so that the UE3 may communicate with the network element 1 based on the RRC connection, such as downloading video data from the network element 1. A specific implementation process in which the UE3 establishes the RRC connection with the network element 1 has related applications in an actual application scenario. Details are not described herein again.

In this embodiment, a description is provided by using an example in which the UE3 establishes the RRC connection with the network element 1. In another embodiment, the UE3 and the network element 1 may also establish a connection in another manner. No limitation is imposed herein.

S304: The network element 1 sends, to the UE3 based on the established RRC connection, an RRC reconfiguration message, where the RRC reconfiguration message may be used for performing measurement configuration (measure configurations) on the UE3.

After the UE3 establishes the RRC connection with the network element 1, the network element 1 may send the RRC reconfiguration message to the UE3. The RRC reconfiguration message may be used for configuring a measurement behavior of the UE3, such as configuring parameters such as a measurement object (measurement objects) and a measurement report configuration (measurement report configurations) of the UE3.

In this embodiment, when the network element 1 performs measurement configuration on the UE3, the configured measurement object may include quality of signals such as the SSB sent by each network element received by the UE3. In the communication system shown in FIG. 2, the SSB signals received by the UE3 are the SSBs sent by the network element 1 and the network element 2 respectively. In this way, when subsequently the network element 1 perceives that the signal quality of the SSB sent by the network element 1 received by the UE3 is poor and the signal quality of the SSB sent by the network element 2 received by the UE3 is high, the network element 1 may switch, from the network element 1 to the network element 2, the network element that establishes the RRC connection with the UE3. Alternatively, when subsequently the network element 1 perceives that the signal quality of both the SSB sent by the network element 1 received by the UE3 and the SSB sent by the network element 2 is high, the network element 1 may add a carrier of the network element 2 to the UE3, to improve efficiency of data transmission between the UE3 and a network side, and satisfy a requirement of the UE3 for a relatively high bandwidth.

It should be noted that, in the communication system shown in FIG. 2, the network element 2 is in a state of not broadcasting the SSB and the SIB1 (for achieving network energy saving). Therefore, the network element 1 may not only perform measurement configuration on the UE3, but may also indicate, by performing step S305, the network element 2 to broadcast the SSB, so that the UE3 measures signal quality of the SSB broadcast by the network element 2.

S305: The network element 1 sends a wake-up signal to a network element 2, where the wake-up signal is used for triggering the network element 2 to broadcast a first signal.

The first signal may be, for example, an SSB. Alternatively, the first signal may be an SSB and a SIB1. Alternatively, the first signal may be a SIB1. Alternatively, the first signal may be a tracking reference signal (tracking reference signal, TRS). Alternatively, the first signal may be another type of signal, such as a channel state information reference signal (channel state information reference signal, CSI-RS).

In a possible implementation, the network element 1 may send a wake-up signal (wake up signal, WUS) to the network element 2 through an Xn interface, to indicate the network element 2 to send the first signal. The WUS sent by the network element 1 may be implemented in the following manners.

In Example 1, the WUS may be a newly defined wake-up message. For example, a new type of message may be defined in a communication standard protocol (such as release 19). A name of the message may be, for example, "WAKEUP REQUEST", so that the network element 1 may wake up the network element 2 to broadcast the first signal by sending the message to the network element 2.

In Example 2, the WUS may be implemented by defining a new information element (information element, IE) in an existing message. For example, an IE named "Wakeup Request" may be defined in an existing "HANDOVER REQUEST" message, "XN SETUP REQUEST" message, or "CELL ACTIVATION REQUEST" message in the communication standard protocol. In this way, the network element 1 may wake up the network element 2 to broadcast the first signal by sending a message including the IE to the network element 2.

In Example 3, the WUS may be implemented by defining a new enumeration value in an IE included in an existing message. For example, a new enumeration value "wakeup" may be defined in "Cause" (an IE) included in an existing "HANDOVER REQUEST" message in the communication standard protocol. In this way, the network element 1 may wake up the network element 2 to broadcast the first signal by sending a message including the enumeration value to the network element 2.

During actual application, the network element 1 may also send the WUS to the network element 2 in another manner. No limitation is imposed herein.

Further, the WUS sent by the network element 1 to the network element 2 may further carry a reason for waking up the network element 2 to broadcast an SSB (or another signal). For example, the WUS sent by the network element 1 to the network element 2 may include a cause (cause) field, where the cause field may include one or more bits. The cause field may have a plurality of values. When a value of the cause field is a first value, the cause field may indicate that the network element 1 needs to switch a carrier for the UE3 (that is, switch a cell accessed by the UE3). When the value of the cause field is a second value, the cause field may indicate that the UE3 needs to achieve downlink synchronization with the network element 2, and the like. Possible values of the cause field may be predefined in the communication standard protocol.

S306: The network element 2 broadcasts the first signal.

In this embodiment, under wake up of the network element 1, the network element 2 may enter, from a low-power-consumption state of not broadcasting an SSB and a SIB1, a high-power-consumption state of broadcasting the first signal, and broadcast one or more first signals, where the first signal may be one or more of an SSB, a SIB1, and a TRS.

For example, this embodiment provides the following non-limiting implementation examples about the network element 2 broadcasting the first signal.

In Example 1, the network element 2, after receiving the WUS, may periodically broadcast the first signal. When the first signal is specifically an SSB and a SIB1, the UE3 may access the network element 2 based on the received first signal, or may, after receiving the SIB1 in the first signal, locally store SIB1 information required for accessing the network element 2.

In Example 2, the network element 2, after receiving the WUS, may broadcast the first signal within a preset quantity of periods. For example, the network element 2 may continuously broadcast the first signal within two signal broadcasting periods. After the network element 2 completes broadcasting of the first signal within the preset quantity of signal broadcasting periods, the network element 2 may re-enter a state of operating with low energy consumption. In other words, the network element 2 enters a state of not broadcasting the first signal, until after the network element 2 receives the WUS again, the network element starts broadcasting the first signal again, so as to implement effective energy saving of the network element 2.

A quantity of times that the network element 2 continuously broadcasts the first signal may be defined in the communication standard protocol, or the network element 1 may separately notify the network element 2 and the UE3 of the quantity of broadcasting times. For example, the network element 1 may indicate, in the sent WUS, a quantity of times that the network element 2 broadcasts the first signal, and may indicate the quantity of times in an RRC reconfiguration message sent to the UE3. In this way, the UE3 improves a success rate of signal decoding by receiving the first signal continuously broadcast by the network element 2.

In this embodiment, in a process in which the network element 2 broadcasts the first signal, the network element may not distinguish between beams, that is, in each period, the network element 2 may send only one first signal. Alternatively, the network element 2 may also broadcast the first signal by distinguishing between beams, so that after receiving the WUS, the network element 2 may respectively send the first signal on a plurality of beams. In other words, in each period, the network element 2 may send a plurality of first signals based on different beams. Alternatively, when sending the WUS to the network element 2, the network element 1 may further indicate a beam on which the network element 2 broadcasts the first signal (a quantity of specified beams may be one or more). For example, the WUS sent by the network element 1 may carry an identifier of a beam, and the identifier indicates a beam on which the network element 2 broadcasts a signal. Therefore, the network element 2 may broadcast the first signal on the beam indicated by the network element 1.

S307: The UE3 measures signal quality of the first signal broadcast by the received network element 1, and measures signal quality of the SSB broadcast by the received network element 2.

In a specific implementation, the UE3 may, based on measurement configuration, measure signal quality of the SSB broadcast by the received network element 1, and measure signal quality of the first signal broadcast by the network element 2, to obtain corresponding measurement results, where the measurement results may be, for example, numerical values, and may indicate a level of signal quality. In addition, the UE3 may further identify a network element to which the received first signal belongs. For example, when the first signal is specifically an SSB, the UE3 may parse, based on an MIB in the SSB, an identifier of a network element to which the SSB belongs, and the like, so that the signal quality when signals respectively broadcast by the network element 1 and the network element 2 are transmitted to the UE3 can be distinguished.

S308: The UE3 may send a measurement report (measurement report) to the network element 1 based on the RRC connection, where the measurement report includes the signal quality of the SSB sent by the network element 1 received by the UE3, and the signal quality of the first signal sent by the network element 2.

In this embodiment, the UE3 may send the measurement report to the network element 1 based on the following three implementations.

In a first implementation example, the UE3 may periodically send the measurement report. In a specific implementation, the UE3 may periodically measure, based on the measurement configuration, signal quality of the received first signal, add a measurement result and a signal quality measurement result for the SSB broadcast by the network element 1 to the measurement report, and send the measurement report to the network element 1 through the RRC connection. The measurement report may include an identifier of a network element, a value indicating a level of signal quality, and the like. A period in which the UE3 sends the measurement report may be configured through the RRC reconfiguration message sent previously by the network element 1.

In a second implementation example, the UE3 may send the measurement report once based on event triggering. Specifically, the UE3 may respectively measure signal quality of the SSB sent by the received network element 1 and measure signal quality of the first signal sent by the network element 2, and identify the SSB sent by the network element 1 and the first signal sent by the network element 2. When the signal quality of the first signal sent by the network element 2 is higher than a threshold, the UE3 may determine that there is a measurement event that triggers sending of the measurement report (for example, an A4 event), so that the UE3 may trigger execution of a process of sending the measurement report to the network element 1, where the measurement report includes the signal quality of the SSB of the network element 1 and the signal quality of the first signal of the network element 2 that are obtained through measurement by the UE3. After sending the measurement report, the UE3 may trigger execution of the process of sending the measurement report again when detecting a new measurement event.

In a third implementation example, the UE3 may periodically send the measurement report based on event triggering. Specifically, the UE3 may respectively measure signal quality of the SSB sent by the received network element 1 and measure signal quality of the first signal sent by the network element 2, and identify the SSB sent by the network element 1 and the first signal sent by the network element 2. When the signal quality of the first signal sent by the network element 2 is higher than a threshold, the UE3 may determine that there is a measurement event that triggers sending of the measurement report, so that the UE3 may start periodically sending the measurement report to the network element 1, where the measurement report includes the signal quality of the SSB of the network element 1 and the signal quality of the first signal of the network element 2 that are obtained through measurement by the UE3. In a process in which the UE3 periodically sends the measurement report, the UE3 may count a quantity of times of sending the measurement report, until the quantity of times that the UE3 sends the measurement report reaches a specified quantity of times, and then the UE3 ends the process of periodically sending the measurement report.

Which implementation is used by the UE3 to send the measurement report to the network element 1 may be configured through the RRC reconfiguration message sent previously by the network element 1. For example, a manner in which the UE3 sends the measurement report may be configured in a ReportConfigToAddModList field in MeasConfig in the RRC reconfiguration message.

During actual application, the UE3 may send the measurement report to the network element 1 in another manner. Embodiments constitute no limitation herein.

In this way, after receiving the measurement report sent by the UE3, the network element 1 may switch or add a carrier for the UE3 based on the signal quality of the SSB broadcast by the network element 1 received by the UE3 and the signal quality of the first signal broadcast by the network element 2 that are indicated in the measurement report, so as to provide better service for the UE3.

For example, when the network element 1 determines based on the measurement report that the signal quality of the SSB from the network element 1 received by the UE3 is relatively low and the signal quality of the first signal from the network element 2 received by the UE3 is relatively high, the network element 1 may indicate the UE3 to switch, from the network element 1 to the network element 2, the network element connected to the UE3, to improve communication quality between the UE3 and a network side.

For another example, when the network element 1 determines based on the measurement report that the signal quality of the SSB from the network element 1 received by the UE3 is relatively high and the signal quality of the first signal from the network element 2 received by the UE3 is also relatively high, if the UE3 has a relatively high bandwidth requirement, the network element 1 may add a carrier of the network element 2 to the UE3 (as a secondary carrier). In this way, the UE3 may simultaneously use carriers respectively provided by the network element 1 and the network element 2 to transmit data, including sending data to the network element or receiving data sent by the network element, and the like, to improve communication efficiency between the UE3 and the network side.

It should be noted that, in this embodiment, an example in which the measurement report sent by the UE3 to the network element 1 includes the signal quality of two network elements is described. In other embodiments, the measurement report sent by the UE3 to the network element 1 may include only quality of a signal of the network element 2. For example, the UE3 may measure only signal quality of the first signal from the network element 2, and when the UE3 determines, through measurement, that the signal quality of the first signal from the network element 2 is lower than a preset threshold, send a measurement report including the signal quality of the network element 2 to the network element 1.

In this embodiment, when the UE3 and the network element 1 are in a connected state, before the network element 2 receives the wake-up signal sent by the network element 1, the network element 2 may be in a state of not sending an SSB and a SIB1, so that energy consumption of the network element 2 can be saved, thereby achieving network energy saving. In addition, after the network element 2 is woken up, the network element 2 may send the first signal, to ensure a normal network function (for example, the UE3 performs signal quality measurement on the first signal, or the UE3 achieves downlink synchronization with the network element 2 based on the first signal).

In the embodiment shown in FIG. 3 above, in a scenario in which the network element 1 performs measurement configuration for the UE3, the network element wakes up the network element 2 from an energy-saving state of not broadcasting the SSB and the SIB1, to switch to a working state of broadcasting the first signal. In a scenario in which the network element 1 adds a carrier of the network element 2 to the UE3, the network element 1 may also indicate, by sending a wake-up signal to the network element 2, the network element 2 to send the first signal. Descriptions are given below with reference to FIG. 4.

Refer to FIG. 4. Another communication method according to an embodiment of this application is shown. As shown in FIG. 4, a process of the communication method includes the following steps.

S401: A network element 1 sends an RRC reconfiguration message to a UE3, where the reconfiguration message is used for adding a carrier of a network element 2 to the UE3.

In this embodiment, the network element 1 and the UE3 may be in a connected state, that is, the network element 1 and the UE3 have established an RRC connection. In an actual application scenario, when providing a communication service for the UE3, the network element 1 may add the carrier of the network element 2 to the UE3 when a predefined condition is satisfied. For example, when the network element 1 needs to send a relatively large amount of data to the UE3 (for example, an amount of to-be-transmitted data is greater than a threshold), the network element 1 may dynamically add the carrier of the network element 2 to the UE3. When the amount of data that the network element 1 needs to send to the UE3 is greater than the threshold, the predefined condition is satisfied. In this way, a network side simultaneously uses the carrier of the network element 1 and the carrier of the network element 2 to send data to the UE3, to improve efficiency of data transmission. In this case, the carrier of the network element 1 may serve as a primary carrier, for example, responsible for transmission of signaling and part of user data (user data) between the network side and the UE3, and the carrier of the network element 2 may serve as a secondary carrier, for example, responsible for transmission of another part of the user data between the network side and the UE3.

As an implementation example, the network element 1 may determine, based on a measurement report sent by the UE3 (such as the measurement report mentioned in the embodiment shown in FIG. 3), signal quality when a signal sent by the network element 2 is transmitted to the UE3. When the signal received by the UE3 from the network element 2 has relatively high quality, the network element 1 may add the carrier of the network element 2 to the UE3 when an amount of data that needs to be sent to the UE3 is relatively large, or an amount of data that needs to be sent by the UE3 to the network side is relatively large.

During specific implementation, the network element 1 may send the RRC reconfiguration message to the UE3 based on the RRC connection. The RRC reconfiguration message may include relevant information such as an identifier of the network element 2 and a carrier to be added, so as to add a new carrier to the UE3 based on the RRC reconfiguration message.

S402: The network element 1 sends an activation message to the UE3, where the activation message is used for activating the carrier added by the network element 1 to the UE3.

In this embodiment, after the network element 1 configures the carrier of the network element 2 for the UE3, when the carrier is not activated, the UE3 cannot use the carrier to perform data transmission with the network side. Therefore, the network element 1 may send the activation message to the UE3, to activate the new carrier configured for the UE3.

For example, the activation message sent by the network element 1 may be, for example, a medium access control-control element (medium access control-control element, MAC-CE) message, or may be another type of message. No limitations are imposed herein.

S403: The network element 1 sends a WUS to the network element 2, where the WUS is used for triggering the network element 2 to broadcast a first signal.

During specific implementation, the network element 1 may send the WUS to the network element 2 through an Xn interface. For a specific implementation, refer to the related description of sending the WUS in the embodiment shown in FIG. 3. Details are not described herein.

It may be understood that the UE3 has not accessed the network element 2, and the network element 2 is in an energy-saving state of not broadcasting the SSB and the SIB1. Therefore, during addition of the carrier of the network element 2 to the UE3, the network element 1 may send the WUS to the network element 2, to indicate the network element 2 to broadcast the first signal required for the UE3 to access the network element 2.

The first signal may be, for example, an SSB and a SIB1. Alternatively, the first signal may be an SSB. Alternatively, the first signal may be a SIB1. Alternatively, the first signal may be a TRS, or may be another signal that can allow the UE3 to access the network element 2.

S404: The network element 2 broadcasts the first signal.

S405: The UE3 accesses the network element 2 based on the received first signal.

In a first implementation, when the first signal is the SSB and the SIB1, this embodiment provides the following non-limiting implementation examples.

In Example 1, the network element 2 may resume periodic broadcasting of the SSB and the SIB1 after receiving the WUS. In this way, the UE3 may achieve downlink synchronization with the network element 2 based on the SSB broadcast by the network element 2, and access the network element 2 based on the MIB in the SSB and the SIB1, so as to facilitate subsequent data transmission between the UE3 and the network side by using the carrier of the network element 2.

In Example 2, the network element 2 may broadcast the SSB and the SIB1 within a preset quantity of periods after receiving the WUS, so that the UE3 can increase a success rate of signal decoding by continuously receiving the SSB and the SIB1. For example, the network element 2 may broadcast the SSB and the SIB1 continuously within two periods. After completing the broadcasting of the SSB and the SIB1 within the preset quantity of periods, the network element 2 may reenter an energy-saving state of not broadcasting the SSB and the SIB1, until the network element 2 restarts broadcasting the SSB and the SIB1 after receiving the WUS again. In this way, the UE3 can access the network element 2 based on the received SSB and SIB1.

In Example 3, the network element 2 may determine, based on a current load condition after receiving the WUS, whether to broadcast the SSB and the SIB1. For example, after receiving the WUS, the network element 2 may obtain a load thereof, and determine whether the load is greater than a load threshold. When the load of the network element 2 is greater than the load threshold, the network element 2 may refuse to broadcast the SSB and the SIB1, to avoid an excessively large load of the network element 2 as a result of the UE3 accessing the network element 2. When the load of the network element 2 is less than or equal to the load threshold, it indicates that the network element 2 has sufficient capability to serve a new UE. Therefore, the network element 2 may start to broadcast the SSB and the SIB1, to support the UE3 in accessing the network element 2.

The network element 2 may not perform beam differentiation during broadcasting of the SSB and the SIB1, that is, within each period, the network element 2 may send only one SSB and SIB1. Alternatively, the network element 2 may also broadcast the SSB and the SIB1 by performing beam differentiation, so that the network element 2 can separately send the SSB and the SIB1 on a plurality of beams after receiving the WUS. In other words, within each period, the network element 2 may send a plurality of SSBs and a plurality of SIB1s. Alternatively, when sending the WUS to the network element 2, the network element 1 may also indicate a beam on which the network element 2 broadcasts the SSB and the SIB1 (a quantity of the beams may be one or more). Therefore, the network element 2 may broadcast the SSB and the SIB1 on the beam indicated by the network element 1.

In a second implementation, the first signal is the SSB. In this case, because the UE3 and the network element 1 are in a connected state (RRC-CONNECTED), the network element 1 may send SIB1 information of the network element 2 to the UE3 through the RRC connection with the network element 1. For example, the network element 1 may send the SIB1 of the network element 2 to the UE3 through an RRC message, so that the UE3 obtains basic configuration information required for accessing the network element 2. In this way, the network element 2 can broadcast the SSB within one or more periods after receiving the WUS, and does not need to broadcast the SIB1, thereby reducing energy consumption of the network element 2 while enabling the UE3 to access the network element 2. Correspondingly, the UE3 may achieve downlink synchronization with the network element 2 based on the received SSB, and then access the network element 2 based on the SIB1 of the network element 2 sent by the network element 1 previously.

The network element 2 may send the SIB1 of the network element 2 to the network element 1 in advance. For example, before receiving the WUS, the network element 2 may send the SIB1 of the network element 2 to the network element 1 through the Xn interface. In this way, for each UE to which the carrier of the network element 2 needs to be added, the network element 1 may send the SIB1 of the network element 2 to the UE by establishing the RRC connection with the UE, to reduce energy consumption of the network element 2.

In a third implementation, the first signal is the SIB1. In this case, the network element 1 and the network element 2 may be co-located, and a frame header of a carrier 1 of the network element 1 is aligned with a frame header of a carrier 2 of the network element 2. Therefore, the UE3 may achieve downlink synchronization with the network element 1 based on the SSB broadcast by the network element 1, and achieve downlink synchronization with the network element 2 by performing calculation based on a carrier frequency between two network elements that is carried in the SIB1 broadcast by the network element 1. For example, the UE3 may calculate a frequency difference between carriers of the two network elements, and achieve downlink synchronization with the network element 2 based on the frequency difference and the SSB broadcast by the network element 1. In addition, the network element 1 may send, to the UE3 based on the RRC connection, an MIB required for decoding the SIB1 broadcast by the network element 2. The MIB may be sent by the network element 2 to the network element 1 in advance for storage. In this way, after achieving downlink synchronization with the network element 2 through corresponding calculation, the UE3 can access the network element 2 based on the MIB sent by the network element 1 through the RRC connection and the SIB1 broadcast by the network element 2.

In a fourth implementation, the first signal is the TRS. In this case, the network element 2 may send the SIB1 of the network element 2 and an MIB required for decoding the SIB1 to the network element 1 in advance, so that the network element 1 can send the MIB and the SIB1 to the UE3 based on the RRC connection after establishing the RRC connection with the UE3. In this way, the network element 2 may periodically broadcast the TRS after receiving the WUS sent by the network element 1. Correspondingly, the UE3 may achieve downlink synchronization with the network element 2 based on the received TRS, and then access the network element 2 based on the MIB and the SIB1 corresponding to the network element 2 that are sent by the network element 1 previously.

It may be understood that when the first signal is implemented in another manner, the UE3 may also achieve downlink synchronization with the network element 2 and access the network element 2 in another manner. Embodiments constitute no limitation herein.

In this way, carriers used when the UE3 communicates with the network side may simultaneously include a first carrier and a second carrier. The first carrier is a carrier used for communication between the UE3 and the network element 1, and the second carrier is a carrier used for communication between the UE3 and the network element 2. Then, the UE3 may exchange signaling and user data with the network element 1 through the first carrier, and exchange user data with the network element 2 through the second carrier.

That the UE3 accesses the network element 2 may specifically mean that the UE3 performs uplink and downlink services with the network element 2 after achieving synchronization with the network element 2. Therefore, the UE3 may not perform a random access process with the network element 2.

In an actual application scenario, signal coverage of the network element 2 may further include another UE. When the first signal broadcast by the network element 2 is the SSB and the SIB1, the another UE can also access the network element 2 based on the SSB and the SIB1 broadcast by the network element 2.

In this embodiment, because before receiving the WUS, the network element 2 may not need to broadcast the SSB and the SIB1, the network element 2 can save energy consumption generated by sending the SSB and the SIB1 signals, to achieve network energy saving. In the meantime, after the network element 2 receives the wake-up signal, the network element 2 may enable, by broadcasting the first signal, the UE3 to normally access the network element 2, to add the carrier of the network element 2 to the UE3.

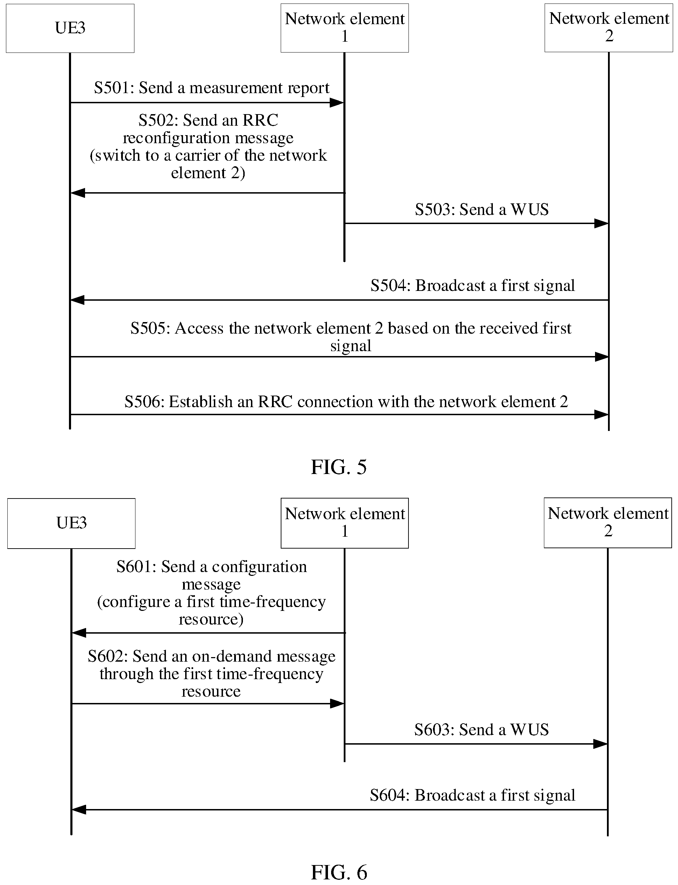

In the embodiment shown in FIG. 4, a description is provided by using a scenario in which the network element 1 adds the carrier of the network element 2 to the UE3 as an example. In another scenario, the network element 1 may also indicate the UE3 to switch a network element that establishes an RRC connection with the UE3, that is, to switch the carrier used when the UE3 communicates with the network side. Descriptions are given below with reference to FIG. 5.

Refer to FIG. 5. Still another communication method according to an embodiment of this application is shown. As shown in FIG. 5, the procedure of the communication method includes the following steps:
S501: A UE3 sends a measurement report to a network element 1 based on an RRC connection, where the measurement report includes signal quality of the SSB sent by the network element 1 received by the UE3 and signal quality of the SSB sent by the network element 2.

For a specific implementation in which the network element 1 performs measurement configuration on the UE3 in advance and the UE3 sends the measurement report, refer to related descriptions in the embodiment shown in FIG. 3 above. Details are not described herein again.

S502: The network element 1 sends an RRC reconfiguration message to the UE3, where the RRC reconfiguration message is used for switching a carrier for the UE3.

In this embodiment, after receiving the measurement report, the network element 1 may determine, based on a signal measurement condition recorded in the measurement report, whether the signal quality of the UE3 is excessively low after a signal sent by the network element 1 is transmitted to the UE3. If it is determined through measurement that the signal quality from the network element 1 received by the UE3 is relatively low, in this case, after the signal sent by the network element 1 is transmitted to the UE3, the UE3 may be unable to correctly parse all content indicated by the signal, thereby affecting a communication effect between the UE3 and the network element 1. For example, the network element 1 needs to frequently retransmit the signal to ensure that the UE3 can successfully parse signal content. Meanwhile, the measurement report also records that the signal quality from the network element 2 received by the UE3 is relatively high. Then, the network element 1 may determine to switch a carrier used for the UE3.

In a specific implementation, the network element 1 may send an RRC reconfiguration message to the UE3, where the RRC reconfiguration message may include indication information of switching a carrier, an identifier of the network element 1, an identifier of a carrier before switching (that is, an identifier of a carrier of the network element 1), an identifier of the network element 2, an identifier of a carrier after switching (that is, an identifier of a carrier of the network element 2), and the like, so as to implement, based on the RRC reconfiguration message, switching a carrier used for the UE3 from the first carrier to the second carrier. The first carrier is a carrier used when the UE3 communicates with the network element 1, and the second carrier is a carrier that can be provided by the network element 2.

S503: The network element 1 sends a WUS to the network element 2, where the WUS is used for triggering the network element 2 to broadcast a first signal.

During specific implementation, the network element 1 may send the WUS to the network element 2 through an Xn interface. For a specific implementation, refer to the related description of sending the WUS in the embodiment shown in FIG. 3. Details are not described herein.

It may be understood that the UE3 currently does not access the network element 2, and the network element 2 is in an energy-saving state of not broadcasting the SSB and the SIB1. Therefore, in a process in which the network element 1 switches a carrier for the UE3, the network element may send the WUS to the network element 2, to indicate the network element 2 to broadcast the first signal required for the UE3 to access the network element 2.

The first signal may be, for example, an SSB and/or a SIB1. Alternatively, the first signal may be a TRS. Alternatively, the first signal may be another signal that can allow the UE3 to access the network element 2. No limitation is imposed herein.

S504: The network element 2 broadcasts the first signal.

S505: The UE3 accesses the network element 2 based on the received first signal.

For example, the UE3 may access the network element 2 through random access based on the received first signal.

S506: The UE3 establishes an RRC connection with the network element 2.

In addition, the UE3 may further disconnect the RRC connection with the network element 1.

For a specific implementation in which the UE3 accesses the network element 2 based on the received first signal, refer to related descriptions, in the embodiment shown in FIG. 3 above, about the UE3 accessing the network element 2 based on the first signal and establishing an RRC connection. Details are not described herein again.

In this embodiment, because before receiving the WUS, the network element 2 may not need to broadcast the SSB and the SIB1, the network element 2 can save energy consumption generated by sending the SSB and the SIB1 signals, to achieve network energy saving. Meanwhile, after the network element 2 receives the wake-up signal, the network element 2 may allow the UE3 to normally access the network element 2 by broadcasting the first signal, thereby implementing switching a carrier of the network element 2 for the UE3. Under normal circumstances, the UE3 switches a carrier that establishes an RRC connection with the network side from a carrier of the network element 1 to a carrier of the network element 2, that is, switching a cell accessed by the UE3 is implemented.

In embodiments shown in FIG. 3 to FIG. 5, a description is provided by using an example in which the network element 1 actively triggers the network element 2 to broadcast the first signal. In another application scenario, the UE3 may also trigger, by sending an on-demand message to the network element 1, the network element 2 to broadcast the first signal. Descriptions are given below with reference to FIG. 6.

Refer to FIG. 6. Yet another communication method according to an embodiment of this application is shown. As shown in FIG. 6, a process of the communication method includes the following steps.

S601: A network element 1 sends a configuration message to a UE3, where the configuration message is used for configuring a first time-frequency resource used by the UE3 when sending an on-demand (on-demand) message.

In an actual application scenario, after the UE3 establishes an RRC connection with the network element 1, the UE3 determines that signal quality is lower than a threshold after measuring quality of a signal received from the network element 1. In this case, the UE3 needs to measure quality of a signal from the network element 2, and indicate, by sending an on-demand message to the network element 1, a network side to provide the signal of the network element 2 (referred to as a first signal below). Alternatively, after the UE3 establishes the RRC connection with the network element 1, the UE3 may need to achieve downlink synchronization with the network element 2. In this case, the UE3 may send an on-demand message to the network element 1, to indicate the network side to provide the signal of the network element 2.

In this embodiment, the UE3 may request, by sending the on-demand message to the network element 1, the network side to provide, for the UE3, a signal required for accessing the network element 2. The signal is referred to as the first signal. The first signal may be one or more of an SSB, a SIB1, and a TRS, or the like. Correspondingly, the network element 1 may configure a time-frequency resource in advance used by the UE3 when sending the on-demand message. For ease of distinction and description, the time-frequency resource is referred to as a first time-frequency resource below.

During specific implementation, the network element 1 may send the configuration message to the UE3. The configuration message can be used for configuring the first time-frequency resource used by the UE3 to send the on-demand message. For example, the configuration message may be, for example, an RRC message, a DCI message, or a MAC-CE message. The first time-frequency resource includes a time-domain resource and a frequency-domain resource. The time-domain resource may be, for example, a slot and an OFDM symbol that can be occupied by the UE3 in time domain. The frequency-domain resource may be, for example, one or more REs that can be occupied by the UE3 in frequency domain.

In some examples, the first time-frequency resource may be a time-frequency resource on a physical uplink shared channel (physical uplink shared channel, PUSCH) that can be used when the UE3 sends information to the network element 1, a time-frequency resource on a physical uplink control channel (physical uplink control channel, PUCCH), a time-frequency resource on a physical random access channel (physical random access channel, PRACH), or a sounding reference signal (sounding reference signal, SRS) resource, or may be another type of time-frequency resource. No limitation is imposed herein. The PUCCH may be a common PUCCH, or may be a dedicated PUCCH.

Correspondingly, the network element 1 may indicate, by using the following non-limiting implementations, the first time-frequency resource used by the UE3 to send the on-demand message.

Further, the configuration message sent by the network element 1 may further configure a code resource used by the UE3 to send the on-demand message. For example, when the first time-frequency resource is the time-frequency resource on a PRACH, the configuration message sent by the network element 1 may further configure a preamble (preamble) used by the UE3 to send the on-demand message, for example, may configure which preamble or preamble ranges indicates the on-demand message. For another example, when the first time-frequency resource is the time-frequency resource on the PUCCH, the configuration message sent by the network element 1 may further configure an orthogonal covering code (orthogonal covering code, OCC) used by the UE3 to send the on-demand message.

S602: The UE3 sends the on-demand message to the network element 1 through the first time-frequency resource.

The on-demand message sent by the UE3 may be used for triggering the network side to broadcast the first signal. The first signal may be, for example, one or more of the SSB, the SIB1, and the TRS corresponding to the network element 2.

In this embodiment, the on-demand message sent by the UE3 may use any one of the following implementations.

In a first possible implementation, the UE3 may send the on-demand message by using the first time-frequency resource on the PRACH. In this case, the on-demand message may be a random access message sent by the UE3 reusing a time-frequency resource configured in on-demand SI. Correspondingly, the network element 1 determines, after receiving the random access message, that the UE3 requests the network side to provide the first signal of the network element 2.

Alternatively, in a communication standard protocol, a new configuration for the on-demand message may be defined based on a configuration for the on-demand SI. For example, an example in which the UE3 requests the SIB1 (that is, the first signal) of the network element 2 is used. A new configuration field named "Sib1-RequestConfig" may be defined in the communication standard protocol, and a random access channel occasion (random access channel occasion, RO) and a preamble that are used in the on-demand message are defined in the configuration field. In this way, the network element 1 may send, to the UE3, a configuration message including the configuration field, so that the UE3 can send, based on the configuration field, the on-demand message corresponding to the preamble by using the first time-frequency resource (that is, the configured RO).

In a second possible implementation, the UE3 may send the on-demand message by using the first time-frequency resource on the PUCCH. In this case, the on-demand message may be specifically uplink control information (uplink control information, UCI) in a new format defined in the communication standard protocol. For example, the new UCI defined in the communication standard protocol may be UCI named a wake-up request (wake up request, WUR). Alternatively, the UCI in an existing format may be reused in the communication standard protocol to serve as the on-demand message, or the like. For example, the reused UCI in the existing format may be an SR (scheduling request).

A quantity of bits included in the on-demand message may be determined based on a quantity of SCells (that is, a quantity of network elements for implementing the SCells) in a communication system. For example, when the quantity of SCells is 1, the on-demand message may include 1 bit. In addition, when a value of the bit is 1, it indicates that a first signal of the SCell is requested. When the value of the bit is 0, it indicates that the first signal of the SCell is not requested. For example, when the quantity of SCells is two, which are respectively SCell 1 and SCell 2, the on-demand message may include two bits. In addition, when values of the two bits are 01, it indicates that the first signal of the SCell 1 is not requested, but the first signal of the SCell 2 is requested. When the values of the two bits are 10, it indicates that the first signal of the SCell 1 is requested, but the first signal of the SCell 2 is not requested.

In this implementation, the first time-frequency resource for sending the on-demand message may be a time-frequency resource on a common PUCCH on a PUCCH, or may be a time-frequency resource on a dedicated PUCCH.

Specifically, when the first time-frequency resource is the time-frequency resource on the common PUCCH, indexes of one or more time-frequency resources on the common PUCCH that can be used when the UE3 sends the on-demand message may be predefined in the communication standard protocol (such as release 19). For example, a table may be defined in the communication standard protocol, the table may record indexes of a plurality of time-frequency resources on a common PUCCH, and each of the indexes is used for identifying a time-frequency resource. Therefore, the configuration message sent by the network element 1 in step S601 may be, for example, a pucch-ResourceCommon message, and the pucch-ResourceCommon message sent by the network element 1 may include an index of the first time-frequency resource. Alternatively, the configuration message sent by the network element 1 may be a separately defined message, such as a pucch-ResourceCommonWur message, and the pucch-ResourceCommonWur message may include the index of the first time-frequency resource. In this case, the network element 1 may send the configuration message to the UE3 through broadcasting.

It should be noted that in this embodiment, the network element 1 indicates, by sending the configuration message to the UE3, the first time-frequency resource used by the UE3 to send the on-demand message. In another embodiment, the UE3 may also independently determine the first time-frequency resource used to send the on-demand message. For example, a time-frequency resource on the common PUCCH used by the UE3 (and another UE) to send the on-demand message may be predefined in the communication standard protocol, so that the UE3 can send the on-demand message to the network element 1 based on the time-frequency resource. For example, a plurality of time-frequency resources on the common PUCCH that can be used by the UE3 (and another UE) to send the on-demand message may be predefined in the communication standard protocol, so that the UE3 can select one of the plurality of time-frequency resources to send the on-demand message, for example, may select the first time-frequency resource from the plurality of time-frequency resources by using a random algorithm or performing a hash operation based on an identifier of the UE3. In this case, the network element 1 may perform signal detection within resource windows corresponding to 16 time-frequency resources, to determine whether the UE3 sends the on-demand message by using one of the time-frequency resources, and the sent on-demand message may be, for example, UCI.

When the first time-frequency resource is a time-frequency resource on the dedicated PUCCH, the on-demand message to be sent by the UE3 may be specifically an SR message. Then, the time-frequency resource on the dedicated PUCCH used by the UE3 to transmit each SR message may be configured in the configuration message sent by the network element 1 in step S601. In the meantime, the configuration message sent by the network element 1 to the UE3 may further include an identifier of the SR message serving as the on-demand message, so that the UE3 can determine, based on the identifier of the SR message, the time-frequency resource (that is, the first time-frequency resource) on the dedicated PUCCH used to send the SR message (that is, the on-demand message). In this case, mapping exists between the identifier of the SR message and the time-frequency resource. Therefore, the identifier of the SR message specified by the network element 1 in the configuration message may also be regarded as an identifier of the first time-frequency resource. Correspondingly, when receiving the SR message based on the first time-frequency resource, the network element 1 may determine that the UE3 has sent the on-demand message to the network element 1. Alternatively, the network element 1 may also indicate, in another manner, the first time-frequency resource on the dedicated PUCCH used by the UE3 to send the on-demand message, for example, may indicate the first time-frequency resource on the dedicated PUCCH by sending the RRC message or the DCI message.

Alternatively, when the first time-frequency resource is the time-frequency resource on the dedicated PUCCH, the on-demand message sent by the UE3 may be specifically UCI. Then, the configuration message sent by the network element 1 to the UE3 may carry an identifier of the first time-frequency resource on the dedicated PUCCH, so that the UE3 can determine, based on the configuration message, the first time-frequency resource on the dedicated PUCCH used to send the on-demand message.

In this case, the configuration message sent by the network element 1 to the UE3 may be, for example, an RRC configuration message. During actual application, the configuration message sent by the network element 1 to the UE3 may configure a plurality of time-frequency resources that can be used by the UE3, and different time-frequency resources may support the UE3 in sending different types of messages to the network element 1. In the meantime, the configuration message may include the identifier of the first time-frequency resource, so that the network element 1 can specify, in the configuration message, the first time-frequency resource used by the UE3 to send the on-demand message.

In another example, the configuration message sent by the network element 1 to the UE3 may be the downlink control information (downlink control information, DCI) message. For example, in the communication standard protocol, a new field may be defined in DCI in an existing format (format), for example, a field named "WurResoureIndicator" is defined. The newly defined field may include a plurality of bits, for example, may include three bits. In this way, the network element 1 may first send the RRC configuration message to the UE3, to configure the plurality of time-frequency resources on the dedicated PUCCH that can be used by the UE3. Then, the network element 1 may send the DCI to the UE3 (that is, the configuration message in step S601), and indicate, by using a value of the newly defined field in the DCI, the first time-frequency resource in the plurality of time-frequency resources that is used for sending the on-demand message. For another example, a DCI message in a new format may be defined in the communication standard protocol, so that the network element 1 can indicate the first time-frequency resource by using the DCI in the newly defined format.

During actual application, a format of the on-demand message may be implemented by using a PUCCH format0 or a PUCCH format1 that carries a relatively small quantity of UCI bits.

In a third possible implementation, after the UE3 establishes the RRC connection with the network element 1, the on-demand message sent by the UE3 may be the SRS of a specific type. A type of the SRS serving as the on-demand message may be predefined in the communication standard protocol.

The first time-frequency resource used for sending the SRS may be an SRS resource predefined in the communication standard protocol. For example, based on an identifier of a resource, a lowest resource in a lowest SRS resource set (resource set) may be defined as the first time-frequency resource for sending the on-demand message, or a highest resource in a highest SRS resource set (resource set) may be defined as the first time-frequency resource for sending the on-demand message. No limitation is imposed herein.

Alternatively, the network element 1 may indicate, through the configuration message (such as the RRC configuration message or the DCI message), an identifier of the SRS resource serving as the first time-frequency resource, or the like. For example, the network element 1 may configure, through the RRC configuration message (that is, the configuration message in step S601), a plurality of time-frequency resources that can be used by the UE3, and different time-frequency resources may support the UE3 in sending different types of messages to the network element 1. In the meantime, the configuration message may further include the identifier of the first time-frequency resource, so that the network element 1 can specify, in the configuration message, the first time-frequency resource used by the UE3 to send the on-demand message. For example, the network element 1 may first configure, by sending the RRC configuration message, the plurality of time-frequency resources that can be used by the UE3, and then indicate, by sending the DCI message (that is, the configuration message in step S601), the first time-frequency resource used by the UE3 to send the on-demand message.

In addition, the SRS resource predefined in the communication standard protocol or the SRS resource indicated through the configuration message may be a periodic resource. In other words, the UE3 may periodically send, based on the SRS resource, the SRS of the specific type (that is, the on-demand message). During actual application, the SRS resource may also be an aperiodic resource, or a semi-static resource. No limitation is imposed herein.

S603: The network element 1 sends a WUS to the network element 2 after receiving the on-demand message, where the WUS is used for triggering the network element 2 to send the first signal.

The first signal may be, for example, one or more of the SSB, the SIB1, and the TRS.

S604: The network element 2 broadcasts the first signal.

For a specific implementation process of step S603 to step S604, refer to related descriptions in the foregoing embodiments. Details are not described herein.

In this embodiment, after receiving the first signal broadcast by the network element 2, the UE3 may perform the following non-limiting implementations.

In a first implementation, the UE3 may access the network element 2 based on the first signal.

For example, when the first signal is specifically an SSB, the UE3 may achieve downlink synchronization with the network element 2 based on the SSB, and parse an MIB carried in the SSB. In addition, the UE3 may further obtain the SIB1 of the network element 2 that is sent by the network element 1 through the RRC connection. In this way, after achieving downlink synchronization with the network element 2, the UE3 may access the network element 2 based on the MIB and the SIB1.

For another example, when the first signal is specifically a TRS, the UE3 may achieve downlink synchronization with the network element 2 based on the TRS. In addition, the UE3 may further obtain the MIB and the SIB1 of the network element 2 that are sent by the network element 1 through the RRC connection. In this way, after achieving downlink synchronization with the network element 2, the UE3 may access the network element 2 based on the MIB and the SIB1 of the network element 2.

For another example, when the first signal is specifically a SIB1, the UE3 not only may achieve downlink synchronization with the network element 1 by using the SSB broadcast by the network element 1, but also may achieve downlink synchronization with the network element 2 through calculation based on the SSB and a carrier frequency between the two network elements that is carried in the SIB1 broadcast by the network element 1. In this way, after achieving downlink synchronization with the network element 2, the UE3 can access the network element 2 based on the MIB (or an MIB stored by the UE3 in advance) provided by the network element 1 through the RRC connection, and the SIB1 broadcast by the network element 2.

For another example, when the first signal is an SSB and a SIB1, the UE3 may achieve downlink synchronization with the network element 2 based on the received SSB of the network element 2, and parse the MIB carried in the SSB. Therefore, the UE3 can access the network element 2 based on the MIB and the SIB1.

In this embodiment, that the UE3 accesses the network element 2 may specifically mean that the UE3 performs uplink and downlink services with the network element 2 after achieving synchronization with the network element 2. In other words, the UE3 may send data to the network element 2, or the UE3 receives data sent by the network element 2. In this case, the UE3 may not perform a random access process with the network element 2, or may not need to establish the RRC connection with the network element 2.

Alternatively, that the UE3 accesses the network element 2 may specifically mean that the UE3 performs random access with the network element 2. Further, after randomly accessing the network element 2, the UE3 may further establish the RRC connection with the network element 2, and cut off the RRC connection with the network element 1. In this way, the UE3 can switch the network element that establishes an RRC connection with the UE3.

In a second implementation, the UE3 may perform signal quality measurement on the received first signal. For example, after measuring a signal (such as the SSB) broadcast by the network element 1, the UE3 determines that a signal quality is lower than a threshold, indicating a poor communication quality between the UE3 and the network element 1. In this case, the UE3 may indicate, by sending the on-demand message to the network element 1, the network element 2 to broadcast the first signal, so that the UE3 can measure the received first signal, to determine a level of signal quality between the UE3 and the network element 2. When quality of the first signal received by the UE3 is relatively high, it indicates that communication quality is relatively good during communication between the UE3 and the network element 2. In this case, the UE3 may switch, from the network element 1 to the network element 2, the network element that establishes an RRC connection with the UE3.

In a third implementation, the first signal is specifically the SIB1 of the network element 2. When the SIB1 of the network element 2 stored in the UE3 expires (that is, a duration of the SIB1 stored in the UE3 exceeds a preset duration), the UE3 may also indicate, through the network element 1 by sending an on-demand message to the network element 1, the network element 2 to broadcast the SIB1, so that the UE3 updates, based on the SIB1 broadcast by the network element 2, the SIB1 stored in the UE3.

It should be noted that in this embodiment, a description is provided by using an example in which the UE3 indicates, through the network element 1, the network element 2 to broadcast the first signal. During actual application, the communication system may further include another UE. The another UE may also indicate, through the network element 1 in the foregoing similar manner, the network element 2 to broadcast a second signal (such as an SSB, a SIB1, or a TRS). The network element 1 may configure a time-frequency resource in advance used by the another UE when sending the on-demand message.

In this embodiment, because before receiving the wake-up signal, the network element 2 may not need to broadcast signals such as the SSB and the SIB1, the network element 2 can save energy consumption generated by sending the SSB and the SIB1 signals, to achieve network energy saving.

It should be noted that in this embodiment, a description is provided by using an example in which the UE3 sends the on-demand message based on the first time-frequency resource configured by the network element 1. In another embodiment, a time-frequency resource used by the UE3 to send the on-demand message to the network element 1 does not need to be configured by the network element 1.

For example, when the UE3 and the network element 1 have established an RRC connection, the UE3 may send dedicated signaling to the network element 1 based on a dedicated control channel (dedicated control channel, DCCH). The dedicated signaling is the on-demand message in step S602. In this case, a time-frequency resource used by the UE3 to send the dedicated signaling may be determined by the UE3, and does not need to be configured by the network element 1. A format of the dedicated signaling may be predefined in the communication standard protocol.

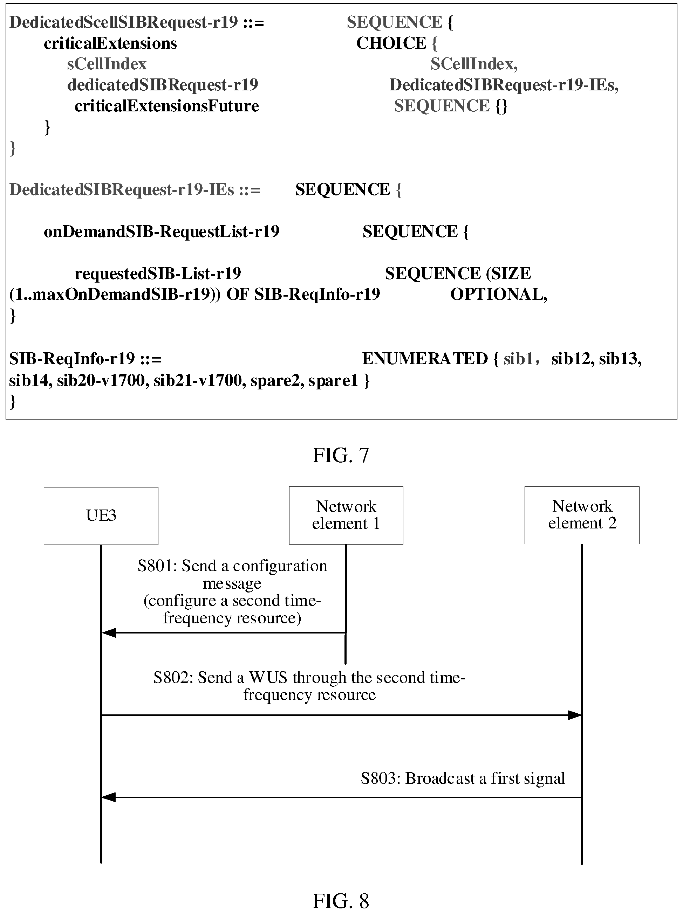

For example, when the first signal of the network element 2 requested by the UE3 from the network side is specifically a SIB1, the dedicated signaling sent by the UE3 to the network element 1 may be specifically a signaling format shown in FIG. 7. The network element 1 may determine, based on a value "SIB1" in an "ENUMERATED" field in the dedicated signaling, that the UE3 requests the SIB1 of the network element 2 from the network side. Similarly, when the first signal of the network element 2 requested by the UE3 from the network side is specifically the SSB or an SSB + SIB1, the dedicated signaling may be defined based on the format shown in FIG. 7. For example, a value "ssb" or "ssb, sib1" may be added to the "ENUMERATED" field in the dedicated signaling.

For another example, when the UE3 and the network element 1 have established an RRC connection, the UE3 may send a measurement report to the network element 1 based on the DCCH. The measurement report may include a cause (cause) field, so that the network element 1 can determine, based on a value of the cause field, a reason why the UE3 requests the network side to provide the first signal of the network element 2. For example, the cause field may include one or more bits. When the value of the cause field is a first value, it may indicate that the UE3 needs to measure signal quality of the network element 2, and when the value of the cause field is a second value, it may indicate that the UE3 needs to achieve downlink synchronization with the network element 2. In this case, the measurement report sent by the UE3 to the network element 1 is the on-demand message in step S602.

In addition, when the UE3 sends the measurement report (the on-demand message) based on the time-frequency resource on the PUCCH, the UE3 may also indicate, by using different types of time-frequency resources, the reason why the UE3 requests the network side to provide the first signal of the network element 2. For example, when the UE3 sends the measurement report by using a time-frequency resource corresponding to an SR1, it may indicate that the UE3 needs to measure the signal quality of the network element 2. When the UE3 sends the measurement report by using a time-frequency resource corresponding to an SR2, it may indicate that the UE3 needs to achieve downlink synchronization with the network element 2.

The foregoing FIG. 8 is described by using an example in which the network element 1 sends the WUS to the network element 2. In other embodiments, the WUS may also be sent by the UE3 to the network element 2. Detailed descriptions are given below with reference to FIG. 8. In the embodiment shown in FIG. 8, the UE3 establishes an RRC connection with the network element 1, and the UE3 accesses the network element 2, so that the network element 1 and the network element 2 may provide a higher bandwidth for the UE through carrier aggregation.

Refer to FIG. 8. A schematic flowchart of yet another communication method is shown. As shown in FIG. 8, the method may specifically include:
S801: A network element 1 sends a configuration message to a UE3, where the configuration message is used for configuring a second time-frequency resource used by the UE3 when sending a WUS.

In this embodiment, the UE3 may trigger, by sending the WUS to a network element 2, the network element 2 to broadcast a signal required by the UE3 (referred to as a first signal below), where the first signal may be any one or more of an SSB, a SIB1, and a TRS. Correspondingly, the network element 1 may configure a time-frequency resource in advance used by the UE3 when sending the WUS. For ease of distinction and description, the time-frequency resource is referred to as a second time-frequency resource below.

In a specific implementation, the network element 1 may send the configuration message to the UE3, where the configuration message may be used for configuring the second time-frequency resource used by the UE3 to send the WUS. For example, the configuration message may be, for example, an RRC message or a DCI message. The second time-frequency resource includes a time-domain resource and a frequency-domain resource. The time-domain resource may be, for example, a slot and an OFDM symbol that can be occupied by the UE3 in time domain. The frequency-domain resource may be, for example, one or more REs that can be occupied by the UE3 in frequency domain.

In some examples, the second time-frequency resource may be a time-frequency resource on a PUSCH that can be used when the UE3 sends information to the network element 2, a time-frequency resource on a PUCCH, a time-frequency resource on a PRACH, or an SRS resource, or may be another type of a time-frequency resources. No limitation is imposed herein.

In this embodiment, for a specific implementation of step S801, refer to related descriptions of step S601 in the embodiment shown in FIG. 6 above. Details are not described herein again.

S802: The UE3 sends the WUS to a network element 2 through the second time-frequency resource, where the WUS is used for triggering the network element 2 to send the first signal.

In this embodiment, for an implementation in which the UE3 sends the WUS to the network element 2 through the second time-frequency resource, refer to related descriptions in the embodiment shown in FIG. 6 above about the UE3 sending the on-demand message through the first time-frequency resource. Details are not described herein again.

S803: The network element 2 broadcasts the first signal.

For a specific implementation process of step S803, refer to related descriptions in the foregoing embodiments. Details are not described herein again.

Further, the WUS sent by the UE3 to the network element 2 may further carry an identifier of a beam, where the identifier indicates a beam on which the network element 2 broadcasts the first signal. The WUS sent by the UE3 may carry one or more identifiers of beams. Therefore, the network element 2 may broadcast the first signal on one or more beams indicated by the network element 1.

For example, when the UE3 accesses the network element 2, after receiving the first signal broadcast by the network element 2, the UE3 may perform signal quality measurement on the first signal, so that the UE3 sends a signal quality measurement result for the first signal to the network element 1, thereby enabling the network element 1 to perceive signal quality of the network element 2 in real time.

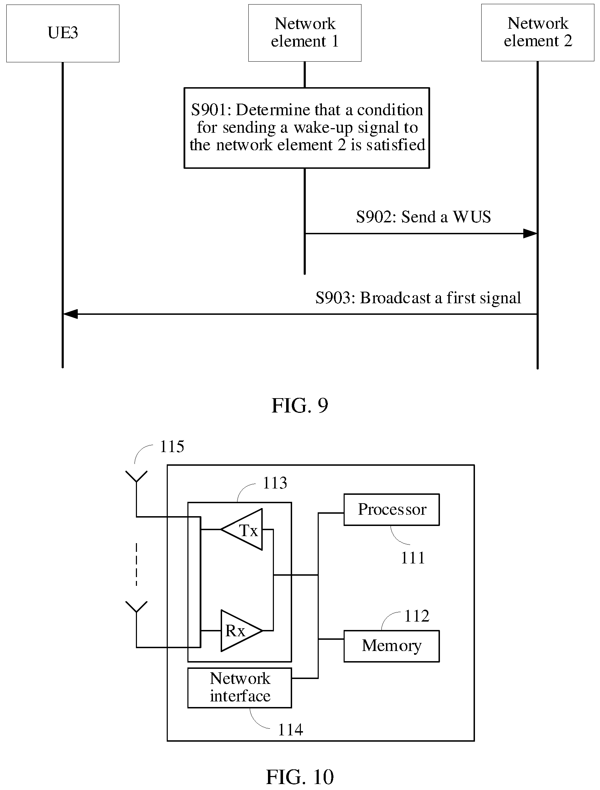

In addition, this application further provides another communication method. Refer to FIG. 9. A schematic flowchart of a communication method is shown. In the embodiment shown in FIG. 9, the UE3 and the network element 1 have established an RRC connection, but the UE3 and the network element 2 have not established an RRC connection. As shown in FIG. 9, the method may specifically include:
S901: A network element 1 determines that a condition for sending a wake-up signal to a network element 2 is satisfied.

In a first possible implementation, that a network element 1 determines that a condition for sending a wake-up signal to a network element 2 is satisfied may be specifically that the network element 1 sends an RRC reconfiguration message to a UE3, where the RRC reconfiguration message is used for configuring the UE3 to perform signal quality measurement on a first signal from the network element 2. For a specific implementation in which the network element 1 sends the RRC reconfiguration message to the UE3, refer to related descriptions about step S304 in the embodiment shown in FIG. 3 above.

In a second possible implementation, that a network element 1 determines that a condition for sending a wake-up signal to a network element 2 is satisfied may be specifically that the network element 1 sends an RRC reconfiguration message to a UE3, where the RRC reconfiguration message is used for adding a carrier of the network element 2 to the UE3. In this case, the network element 1 further sends an activation message to the UE3, where the activation message is used for activating the carrier of the network element 2 that is added to the UE3. For specific implementations in which the network element 1 sends the RRC reconfiguration message and the activation message to the UE3, refer to related descriptions about step S401 and step S402 in the embodiment shown in FIG. 4 above.

In a third possible implementation, that the network element 1 determines that a condition for sending a wake-up signal to a network element 2 is satisfied may be specifically that the network element 1 receives an on-demand message sent by the UE3, where the on-demand message is used for triggering the network element 1 to send a WUS to the network element 2. In this case, before the network element 1 receives the on-demand message, the network element 1 may further send a configuration message to the UE3 in advance, to configure a time-frequency resource used by the UE3 to send the request. When the time-frequency resource configured by the network element 1 through the configuration message is a time-frequency resource on a PRACH, the on-demand message sent by the UE3 is a random access message. Alternatively, when the time-frequency resource configured by the network element 1 through the configuration message is a time-frequency resource on a PUCCH, the on-demand message sent by the UE3 is an SR message or UCI. Alternatively, when the time-frequency resource configured by the network element 1 through the configuration message is an SRS resource, the on-demand message sent by the UE3 is an SRS. Further, the on-demand message sent by the UE3 may further include a cause field, where the cause field indicates a reason why the UE3 requests the first signal.

In this embodiment, for specific implementations in which the network element 1 receives the on-demand message and sends the configuration message, refer to related descriptions about step S601 and step S602 in the embodiment shown in FIG. 6 above.

S902: The network element 1 sends a WUS to the network element 2, where the WUS is used for triggering the network element 2 to send a first signal.

The first signal may be, for example, one or more of the SSB, the SIB1, and the TRS. In addition, the WUS sent by the network element 1 may further include a cause field, where the cause field indicates a reason why the network element 1 indicates the network element 2 to send the first signal. For a specific implementation in which the network element 1 sends the WUS, refer to related descriptions about the network element 1 sending the WUS in embodiments shown in FIG. 3 to FIG. 6 above. Details are not described herein again.

S903: The network element 2 sends the first signal.

For a specific implementation in which the network element 2 sends the first signal, refer to related descriptions about step S306 in the embodiment shown in FIG. 3 above. Details are not described herein again.

Further, when the UE3 receives the RRC reconfiguration message sent by the network element 1, and the RRC reconfiguration message is used for performing measurement configuration on the UE3, the UE3 may further perform signal quality measurement on the received first signal, to obtain a measurement result, and send a measurement report to the network element 1, where the measurement report includes the measurement result. For a specific implementation in which the UE3 sends the measurement report to the network element 1, refer to related descriptions about step S308 in the embodiment shown in FIG. 3 above. Details are not described herein again.

Alternatively, when the UE3 receives the RRC reconfiguration message sent by the network element 1, and the RRC reconfiguration message is used for adding a carrier of the network element 2 to the UE3, the UE3 may further perform signal quality measurement on the received first signal, to obtain a measurement result, and send a measurement report to the network element 1, where the measurement report includes the measurement result. For a specific implementation in which the UE3 sends the measurement report to the network element 1, refer to related descriptions in the embodiment shown in FIG. 4 above. Details are not described herein again.

In addition, when the first signal broadcast by the network element 2 is an SSB, the network element 1 may further send the SIB1 of the network element 2 to the UE3 through the RRC connection with the UE3, so that the UE3 may implement access to the network element 2 based on the SSB broadcast by the network element 2 and the SIB1 of the network element 2 sent by the network element 1. In this case, that the UE3 accesses the network element 2 may specifically mean that after the UE3 achieves synchronization with the network element 2, the UE3 performs uplink and downlink services with the network element 2. In other words, the UE3 may not perform a random access process with the network element 2, and may either not need to establish an RRC connection with the network element 2. Alternatively, that the UE3 accesses the network element 2 may specifically mean that the UE3 performs random access with the network element 2. Therefore, after randomly accessing the network element 2, the UE3 may further establish an RRC connection with the network element 2, and disconnect the RRC connection with the network element 1. In this way, the UE3 can switch the network element that establishes an RRC connection with the UE3.

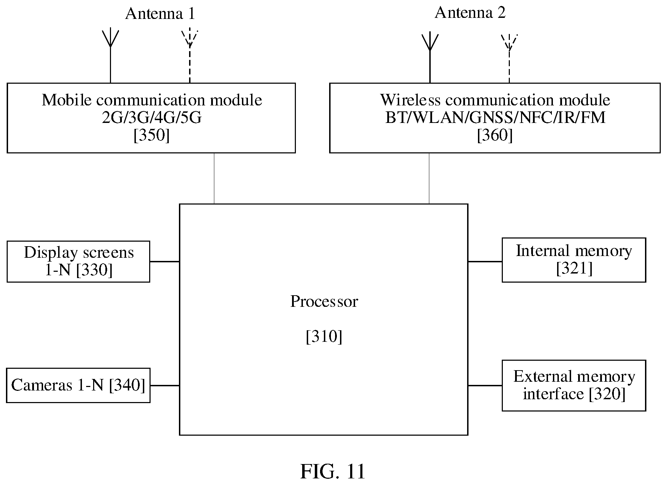

A hardware implementation of a network element and a UE is further described below with reference to FIG. 10 and FIG. 11.

Refer to FIG. 10. A schematic diagram of a hardware structure of a network element is shown. The network element shown in FIG. 10 includes at least one processor 111, at least one memory 112, at least one transceiver 113, at least one network interface 114, and one or more antennas 115. The processor 111, the memory 112, the transceiver 113, and the network interface 114 are connected, for example, through a bus. In embodiments of this application, the connection may include various types of interfaces, transmission lines, buses, or the like. Embodiments constitute no limitation herein. The antenna 115 is connected to the transceiver 113. The network interface 114 is configured to enable the network element to be connected to another communication device through a communication link. For example, the network interface 114 may include a network interface between the network element and a network element in a core network, for example, an S1 interface. The network interface may include a network interface between the network element and another network element, for example, an X2 or Xn interface.

The processor 111 shown in FIG. 10 may specifically complete an action processed by the network element in the foregoing method. The memory 112 may complete a storage action in the foregoing method. The transceiver 113 and the antenna 115 may perform receiving and sending actions on an air interface in the foregoing method. The network interface 114 may complete an action of interaction with the network element or another network element in the foregoing method.

The processor in embodiments of this application, for example, the processor 111, may include but is not limited to at least one of the following: a central processing unit (central processing unit, CPU), a microprocessor, a digital signal processor (DSP), a microcontroller unit (microcontroller unit, MCU), or various types of computing devices running software such as an artificial intelligence processor. Each type of computing device may include one or more cores for executing software instructions to perform an operation or processing. The processor may be a separate semiconductor chip, or may be integrated with another circuit into one semiconductor chip. For example, the processor may form an SoC (system on chip) together with another circuit (for example, a codec circuit, a hardware acceleration circuit, or various bus and interface circuits), or may also be integrated into an ASIC as a built-in processor of the ASIC, where the ASIC integrated with the processor may be packaged separately, or may also be packaged together with another circuit. In addition to including a core for executing software instructions to perform an operation or processing, the processor may further include a necessary hardware accelerator, such as a field programmable gate array (field programmable gate array, FPGA), a PLD (programmable logic device), or a logic circuit for implementing a dedicated logic operation.

The memory in embodiments of this application may include at least one of the following types: a read-only memory (read-only memory, ROM) or another type of static storage device that can store static information and instructions, a random access memory (random access memory, RAM) or another type of dynamic storage device that can store information and instructions, or may also be an electrically erasable programmable read-only memory (Electrically erasable programmable read-only memory, EEPROM). In some scenarios, the memory may also be a compact disc read-only memory (compact disc read-only memory, CD-ROM), or another optical disc storage, optical disk storage (including a compact optical disc, a laser disc, an optical disc, a digital versatile disc, a bluray disc, and the like), a magnetic disk storage medium or another magnetic storage device, or any other medium that may be configured to carry or store desired program code in a form of instructions or data structures and that may be accessed by a computer. This application is not limited thereto.

The memory 112 may exist independently and is connected to the processor 111. Optionally, the memory 112 and the processor 111 may be integrated together, for example, integrated into one chip. The memory 112 can store program code for executing the technical solutions in embodiments of this application, and execution is controlled by the processor 111. Various types of executed computer program code may also be regarded as a driver of the processor 111. For example, the processor 111 is configured to execute the computer program code stored in the memory 112, thereby implementing the technical solutions in embodiments of this application.

The transceiver 113 may be configured to support receiving or sending of radio frequency signals between the network element and another device. The transceiver 113 may be connected to the antenna 115. The transceiver 113 includes a transmitter Tx and a receiver Rx. Specifically, the one or more antennas 115 may receive a radio frequency signal. The receiver Rx of the transceiver 113 is configured to receive the radio frequency signal from the antenna, convert the radio frequency signal into a digital baseband signal or a digital intermediate frequency signal, and provide the digital baseband signal or the digital intermediate frequency signal to the processor 111, so that the processor 111 further processes the digital baseband signal or the digital intermediate frequency signal, for example, performs demodulation processing and decoding processing. In addition, the transmitter Tx in the transceiver 113 is further configured to receive, from the processor 111, a modulated digital baseband signal or a modulated digital intermediate frequency signal, convert the modulated digital baseband signal or the modulated digital intermediate frequency signal into a radio frequency signal, and send the radio frequency signal through the one or more antennas 115. Specifically, the receiver Rx may selectively perform one-stage or multi-stage down-conversion processing and analog-to-digital conversion processing on the radio frequency signal to obtain a digital baseband signal or a digital intermediate frequency signal, and an order of the down-conversion processing and the analogto-digital conversion processing is adjustable. The transmitter Tx may selectively perform one-stage or multi-stage up-conversion processing and digital-to-analog conversion processing on the modulated digital baseband signal or the modulated digital intermediate frequency signal to obtain a radio frequency signal, and an order of the up-conversion processing and the digital-to-analog conversion processing is adjustable. The digital baseband signal and the digital intermediate frequency signal may be collectively referred to as digital signals.

FIG. 11 is a composition example of a UE according to an embodiment of this application. The UE may be, for example, a mobile phone or an intelligent wearable device (for example, an intelligent watch). A mobile phone is used as an example below. The UE may include a processor 310, an external memory interface 320, an internal memory 321, a display screen 330, a camera 340, an antenna 1, an antenna 2, a mobile communication module 350, a wireless communication module 360, and the like.

It may be understood that the structure illustrated in this embodiment does not constitute a specific limitation on the UE. In some other embodiments, the UE may include more or fewer components than those shown in the figure, or some components may be combined, or some components may be split, or components are arranged in different manners. The components shown in the figure may be implemented by using hardware, software, or a combination of software and hardware.

The processor 310 may include one or more processing units. For example, the processor 310 may include an application processor (application processor, AP), a modem processor, a graphics processing unit (graphics processing unit, GPU), an image signal processor (image signal processor, ISP), a controller, a video codec, a digital signal processor (digital signal processor, DSP), a baseband processor, and/or a neural-network processing unit (neural-network processing unit, NPU). Different processing units may be independent components, or may be integrated into one or more processors.

It may be understood that an interface connection relationship between the modules illustrated in this embodiment is merely an example for description, and does not constitute a limitation on the structure of the UE. In some other embodiments of this application, the UE may use an interface connection manner different from that in the foregoing embodiment or use a combination of a plurality of interface connection manners.

The external memory interface 320 may be configured to connect to an external memory card such as a micro SD card, to extend a storage capability of the UE. The external storage card communicates with the processor 310 by using the external memory interface 320, to implement a data storage function. For example, files such as music and videos are stored in the external storage card.

The internal memory 321 may be configured to store computer-executable program code. The executable program code includes instructions. The processor 310 runs the instructions stored in the internal memory 321, to perform various function applications and data processing of the UE. The internal memory 321 may include a program storage area and a data storage area. The program storage area may store an operating system, an application program required for at least one function (for example, a sound playing function or an image playing function), and the like. The data storage area may store data (for example, video stream data) and the like created during use of the UE. In addition, the internal memory 321 may include a high-speed random access memory, and may further include a non-volatile memory, for example, at least one magnetic disk storage device, a flash memory device, or a universal flash storage (universal flash storage, UFS). The processor 310 runs the instructions stored in the internal memory 321, and/or the instructions stored in the memory arranged in the processor, to perform various functions and data processing of the UE.

A wireless communication function of the UE may be implemented by using the antenna 1, the antenna 2, the mobile communication module 350, the wireless communication module 360, the modem processor, the baseband processor, and the like.

The antenna 1 and the antenna 2 are configured to transmit and receive an electromagnetic wave signal. Each antenna in the UE may be configured to cover one or more communication bands. Different antennas may further be multiplexed to improve antenna utilization. For example, the antenna 1 may be multiplexed as a diversity antenna of a wireless local area network. In some other embodiments, the antenna may be used in combination with a tuning switch.

The mobile communication module 350 may provide a solution to wireless communication such as 2G/3G/4G/5G applied to the UE. The mobile communication module 350 may include at least one filter, a switch, a power amplifier, a low noise amplifier (low noise amplifier, LNA), and the like. The mobile communication module 350 may receive an electromagnetic wave through the antenna 1, perform processing such as filtering and amplification on the received electromagnetic wave, and transmit the electromagnetic wave to the modem processor for demodulation. The mobile communication module 350 may further amplify a signal modulated by the modem processor, and convert the signal into an electromagnetic wave by using the antenna 1 for radiation. In some embodiments, at least some of functional modules of the mobile communication module 350 may be arranged in the processor 310. In some embodiments, at least some of the functional modules of the mobile communication module 350 may be arranged in a same component as at least some of modules of the processor 310.

In some embodiments, the UE initiates or receives a call request through the mobile communication module 350 and the antenna 1.

In addition, an operating system runs on the foregoing components, for example, an iOS operating system, an Android operating system, or a Windows operating system. An application program may be installed and run in the operating system. It may be clearly understood by a person skilled in the art that, for convenient and brief description, the explanation and the beneficial effects of related contents in any one of the UEs provided above can refer to the corresponding method embodiment provided above. Details are not described herein.

In addition, an embodiment of this application further provides a computer-readable storage medium. The computer-readable storage medium stores instructions that, when run on one or more computing devices, cause the one or more computing devices to perform the communication method according to the foregoing embodiments.

Further, an embodiment of this application further provides a computer program product. When the computer program product is executed by one or more computing devices, the one or more computing devices perform any one of the methods in the foregoing communication methods. The computer program product may be a software installation package. When any one of the foregoing communication methods needs to be used, the computer program product may be downloaded and executed on a computer.

Based on the descriptions of the foregoing implementations, a person skilled in the art may clearly understand that this application may be implemented by software in addition to necessary universal hardware, or by dedicated hardware, including a dedicated integrated circuit, a dedicated CPU, a dedicated memory, a dedicated component, and the like. Generally, any functions that may be performed by a computer program may be easily implemented by using corresponding hardware. Further, a specific hardware structure used to achieve the same function may be of various forms, for example, an analog circuit, a digital circuit, or a dedicated circuit. However, as for this application, a software program implementation is a better implementation in most cases. Based on such an understanding, the technical solutions of this application, in essence or a part contributing to the conventional technology, may be implemented in a form of a software product. The computer software product is stored in a readable storage medium, such as a floppy disk, a USB flash drive, a removable hard disk, a ROM, a RAM, a magnetic disk, or an optical disc of a computer, and includes instructions for instructing a computer device (which may be a personal computer, a training device, a network device, or the like) to perform the methods according to embodiments of this application.

All or some of the foregoing embodiments may be implemented by using software, hardware, firmware, or any combination thereof. When the foregoing embodiments are implemented by using software, all or some of the foregoing embodiments may be implemented in a form of a computer program product.

The computer program product includes one or more computer instructions. When the computer program instructions are loaded and executed on a computer, all or some of the processes or functions according to embodiments of this application are generated. The computer may be a general-purpose computer, a dedicated computer, a computer network, or another programmable apparatus. The computer instructions may be stored in a computer-readable storage medium, or may be transmitted from a computer-readable storage medium to another computer-readable storage medium. For example, the computer instructions may be transmitted from a website, a computer, a training device, or a data center to another website, another computer, another training device, or another data center in a wired manner (for example, through a coaxial cable, an optical fiber, or a digital subscriber line (DSL)) or a wireless manner (for example, an infrared manner, a radio manner, or a microwave manner). The computer-readable storage medium may be any usable medium that may be stored by a computer, or may be a data storage device, such as a training device or a data center in which one or more usable media are integrated. The usable medium may be a magnetic medium (such as a soft disk, a hard disk, or a magnetic tape), an optical medium (such as a DVD), a semiconductor medium (such as a solid state disk (solid state disk, SSD)), or the like.

The system architecture and the service scenario described in embodiments of this application are intended to describe the technical solutions in embodiments of this application more clearly, and do not constitute a limitation on the technical solutions provided in embodiments of this application. A person of ordinary skill in the art may learn that with evolution of the network architecture and emergence of a new service scenario, the technical solutions provided in embodiments of this application are also applicable to a similar technical problem.

## Claims

1. A communication method, wherein the method is applied to a second network element, and the method comprises:
receiving a wake-up signal, wherein the wake-up signal is used for triggering the second network element to send a first signal, the first signal is used by a user equipment UE to achieve downlink synchronization with the second network element or by the UE to perform signal quality measurement on the first signal, and the UE has not established a radio resource control RRC connection with the second network element; and
sending the first signal.

2. The method according to claim 1, wherein the first signal is one or more of a synchronization signal/physical broadcast channel block SSB, a system information block SIB1, and a tracking reference signal TRS.

3. A communication method, wherein the method is applied to a first network element, the first network element has established a radio resource control RRC connection with a user equipment UE, and the method comprises:
determining that a condition for sending a wake-up signal to a second network element is satisfied, wherein the second network element has not established the RRC connection with the UE, the wake-up signal is used for triggering the second network element to send a first signal, and the first signal is used by the UE to achieve downlink synchronization with the second network element or by the UE to perform signal quality measurement on the first signal; and
sending the wake-up signal to the second network element.

4. The method according to claim 3, wherein the determining that a condition for sending a wake-up signal to a second network element is satisfied comprises:
sending an RRC reconfiguration message to the UE, wherein the RRC reconfiguration message is used for configuring the UE to perform signal quality measurement on the first signal from the second network element; and
the method further comprises:
receiving a measurement report from the UE, wherein the measurement report comprises a measurement result of signal quality measurement performed by the UE on the first signal from the second network element.

5. The method according to claim 3, wherein the determining that a condition for sending a wake-up signal to a second network element is satisfied comprises:
sending an RRC reconfiguration message to the UE, wherein the RRC reconfiguration message is used for adding a carrier of the second network element to the UE; and
sending an activation message to the UE, wherein the activation message is used for activating the carrier of the second network element that is added to the UE; and
the method further comprises:
receiving a measurement report from the UE, wherein the measurement report comprises a measurement result of signal quality measurement performed by the UE on the first signal from the second network element.

6. The method according to claim 3, wherein the determining that a condition for sending a wake-up signal to a second network element is satisfied comprises:
receiving an on-demand message from the UE, wherein the on-demand message is used for triggering the first network element to send the wake-up signal to the second network element.

7. The method according to claim 6, wherein before the receiving an on-demand message from the UE, the method further comprises:
sending a first configuration message to the UE, wherein the first configuration message is used for configuring a first time-frequency resource used by the UE to send the on-demand message.

8. The method according to claim 7, wherein
the first time-frequency resource is a time-frequency resource on a physical random access channel PRACH, and the on-demand message is a random access message; or
the first time-frequency resource is a time-frequency resource on a physical uplink control channel PUCCH, and the on-demand message is a scheduling request SR message or uplink control information UCI; or
the first time-frequency resource is a sounding reference signal SRS resource, and the on-demand message is an SRS.

9. The method according to any one of claims 6 to 8, wherein the on-demand message comprises a cause field, and the cause field indicates a reason why the UE requests the first signal.

10. The method according to any one of claims 3 to 9, wherein the first signal is one or more of a synchronization signal/physical broadcast channel block SSB, a system information block SIB1, and a tracking reference signal TRS.

11. The method according to any one of claims 3 to 10, wherein the wake-up signal comprises a cause field, and the cause field indicates a reason why the first network element indicates the second network element to send the first signal.

12. The method according to any one of claims 3 to 11, wherein the method further comprises:
sending a second configuration message to the UE when the UE accesses the second network element, wherein the second configuration message is used for configuring a second time-frequency resource used by the UE to send the wake-up signal.

13. A communication method, wherein the method is applied to a user equipment UE, the UE has established a radio resource control RRC connection with a first network element, the UE has not established the RRC connection with the second network element, and the method comprises:
sending an on-demand message to the first network element based on the RRC connection between the UE and the first network element, wherein the on-demand message is used for triggering the first network element to send the wake-up signal to the second network element, and the wakeup signal is used for triggering the second network element to send a first signal; and
receiving the first signal, wherein the first signal is used by the UE to achieve downlink synchronization with the second network element or by the UE to perform signal quality measurement on the first signal.

14. The method according to claim 13, wherein the method further comprises:
receiving an RRC reconfiguration message from the first network element, wherein the RRC reconfiguration message is used for configuring the UE to perform signal quality measurement on the first signal from the second network element;
measuring signal quality of the first signal, to obtain a measurement result; and
sending a measurement report to the first network element, wherein the measurement report comprises the measurement result.

15. The method according to claim 13, wherein the method further comprises:
receiving an RRC reconfiguration message from the first network element, wherein the RRC reconfiguration message is used for adding a carrier of the second network element to the UE;
receiving an activation message from the first network element, wherein the activation message is used for activating the carrier of the second network element that is added to the UE;
measuring signal quality of the first signal, to obtain a measurement result; and
sending a measurement report to the first network element, wherein the measurement report comprises the measurement result.

16. The method according to any one of claims 13 to 15, wherein the on-demand message is sent through a first time-frequency resource, and before the sending an on-demand message to the first network element, the method further comprises:
receiving a first configuration message from the first network element, wherein the first configuration message is used for configuring the first time-frequency resource used by the UE to send the on-demand message.

17. The method according to any one of claims 13 to 16, wherein
the first time-frequency resource is a time-frequency resource on a physical random access channel PRACH, and the on-demand message is a random access message; or
the first time-frequency resource is a time-frequency resource on a physical uplink control channel PUCCH, and the on-demand message is a scheduling request SR message or uplink control information UCI; or
the first time-frequency resource is a sounding reference signal SRS resource, and the on-demand message is an SRS.

18. The method according to any one of claims 13 to 17, wherein the on-demand message comprises a cause field, and the cause field indicates a reason why the UE requests the first signal.

19. The method according to any one of claims 13 to 18, wherein the first signal is one or more of a synchronization signal/physical broadcast channel block SSB, a system information block SIB1, and a tracking reference signal TRS.

20. The method according to claim 19, wherein the first signal is the SSB, and the method further comprises:
receiving the system information block SIB1 of the second network element from the first network element through the RRC connection; and
accessing the second network element based on the SSB and the SIB1 when downlink synchronization with the second network element is achieved based on the SSB.

21. The method according to any one of claims 13 to 20, wherein the method further comprises:
receiving a second configuration message sent by the first network element when the UE accesses the second network element, wherein the second configuration message is used for configuring a second time-frequency resource used by the UE to send a wake-up signal; and
sending the wake-up signal to the second network element through the second time-frequency resource.

22. A network element, comprising:
a transceiver, configured to perform a receiving operation and a sending operation in the method according to any one of claims 1 to 12; and
a processor, configured to perform other operations than the receiving operation and the sending operation in the method according to any one of claims 1 to 12.

23. A user equipment UE, comprising:
a transceiver, configured to perform a receiving operation and a sending operation in the method according to any one of claims 13 to 21; and
a processor, configured to perform other operations than the receiving operation and the sending operation in the method according to any one of claims 13 to 21.

24. A communication system, comprising a user equipment UE and a network element, wherein the UE is configured to perform the method according to any one of claims 13 to 21, and the network element is configured to perform the method according to any one of claims 1 to 12.

25. A computer storage medium, configured to store a computer program, wherein the computer program, when executed, is used for implementing the communication method according to any one of claims 1 to 21.
